(19) Europäisches Patentamt
European Patent Office
Office européen des brevets

(11) **EP 2 484 474 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
***B23F 5/20*** *(2006.01)*          ***F16H 55/08*** *(2006.01)*

(21) Anmeldenummer: **11153532.4**

(22) Anmeldetag: **07.02.2011**

(54) **Ermittlungsverfahren für Geometriedaten eines ersten Kegelrades eines Kegelradgetriebes und Kegelradgetriebe, das ein erstes und ein zweites Kegelrad aufweist**

Method for determining geometrical data of a first bevel gear of a bevel gear drive and a bevel gear drive that has a first and second bevel gear

Procédé d'établissement pour données de géométrie d'une première roue conique d'un engrenage de roue conique et engrenage de roue conique, comprenant une première et une seconde roue conique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.08.2012 Patentblatt 2012/32**

(73) Patentinhaber: **Siemens Aktiengesellschaft 80333 München (DE)**

(72) Erfinder:
• **Dort, Florian**
  **86825 Bad Wörishofen (DE)**
• **Hamm, Carsten, Dr.**
  **91058 Erlangen (DE)**
• **Papiernik, Wolfgang, Prof.**
  **91077 Neunkirchen (DE)**
• **Sauer, Tomas, Prof.**
  **90537 Feucht (DE)**
• **Uhlich, Andreas**
  **90530 Wendelstein (DE)**

(56) Entgegenhaltungen:
• **SAVAGE M ET AL: "TOOTH CONTACT SHIFT IN LOADED SPIRAL BEVEL GEARS", GEAR TECHNOLOGY, RANDALL PUBLISHING CO. ELK GROVE, ILLINOIS, US, Bd. 9, Nr. 6, 1. November 1992 (1992-11-01), Seiten 24-31, XP000320616, ISSN: 0743-6858**
• **FIGLIOLINI ET AL: "Algorithms for involute and octoidal bevel gear generation", JOURNAL OF MECHANICAL DESIGN, A S M E INTERNATIONAL, US, Bd. 127, 1. Januar 2005 (2005-01-01), Seiten 664-672, XP009093544, ISSN: 1050-0472, DOI: 10.1115/1.1900147**
• **WIENER D: "KORREKTURVERFAHREN FUER KEGELRADVERZAHNUNGEN", ANTRIEBSTECHNIK, VEREINIGTE FACHVERLAGE, MAINZ, DE, Bd. 39, Nr. 6, 1. Juni 2000 (2000-06-01), Seiten 36,38-42, XP000936034, ISSN: 0722-8546**
• **"5 - Achsen-Fräsen ersetzt klassiches Verzahnen", TECHNISCHE RUNDSCHAU, HALLWAG AG, CH, Bd. 102, Nr. 4, 16. April 2010 (2010-04-16), Seiten 63-66, XP001553338, ISSN: 1023-0823**

EP 2 484 474 B1

## Beschreibung

Die vorliegende Erfindung betrifft ein Ermittlungsverfahren für Geometriedaten eines ersten Kegelrades eines Kegelradgetriebes, das zusätzlich zum ersten Kegelrad ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken,
- wobei ein Rechner anhand von von der Zahnform der ersten Zahnflanken verschiedenen Daten eine Zahnform der ersten Zahnflanken ermittelt.

Die vorliegende Erfindung betrifft weiterhin ein Kegelradgetriebe, das ein erstes und ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken.

Im Maschinenbau existiert eine Vielzahl von Zahnradgetrieben. Insbesondere existieren Stirnradgetriebe und Kegelradgetriebe.

Bei Zahnradgetrieben drehen sich zwei Zahnräder um eine jeweilige Rotationsachse. Beide Zahnräder weisen Zähne mit Zahnflanken auf, über welche die Zahnräder aufeinander einwirken. Jeder Zahn der Zahnräder steht nur während eines Teiles der Rotation des entsprechenden Zahnrades mit einem Zahn des anderen Zahnrades in Wirkkontakt.

Wenn eines der Zahnräder mit einer bestimmten Zahnflanke eines seiner Zähne auf das andere Zahnrad einwirkt, ist es möglich, dass zu jedem Zeitpunkt nur ein Punkt oder nur einige wenige Punkte der jeweiligen Zahnflanke das andere Zahnrad kontaktieren. Diese Art von Kontakt wird im Stand der Technik üblicherweise als Punktkontakt bezeichnet. Alternativ ist es möglich, dass der entsprechende Kontakt zu ein und demselben Zeitpunkt bei einer Vielzahl von Punkten einer Zahnflanke besteht, wobei diese Punkte zusammen eine Linie bilden. Diese Art von Kontakt wird im Stand der Technik üblicherweise als Linienkontakt bezeichnet. Bei einem Linienkontakt verteilt sich das vom einen auf das andere Zahnrad zu übertragende Drehmoment auf eine erheblich größere Fläche als bei einem Punktkontakt. Dies hat eine gleichmäßigere Kraftübertragung und eine geringere Belastung der Zahnräder zur Folge.

Bei einem Stirnradgetriebe liegen unter optimalen Voraussetzungen zwei Stirnräder in einer Ebene und führen eine Drehbewegung durch. Die Drehachsen sind daher parallel zueinander. Die Rotationsbewegungen sind - je nach Art des Stirnradgetriebes - gleichsinnig oder gegenläufig. Verfolgt man die Bewegung zweier Kontaktpunkte - das heißt der beiden Punkte des einen und des anderen Zahnrades, die sich zu einem bestimmten Zeitpunkt berühren - so beschreiben beide Punkte jeweils einen Kreis in ein und derselben Ebene. Die Abrollung kann in dieser Ebene betrachtet werden, und zwar unabhängig von der Zahnbreite. Eine derartige Betrachtung wird im Stand der Technik üblicherweise als Stirnschnitt bezeichnet. Ohne Beschränkung der Allgemeinheit kann ein Stirnradgetriebe in einer derartigen Ebene betrachtet werden. Es liegt ein so genanntes Problem der ebenen Kinematik vor.

Die Form der Zahnräder sollte sich am Abrollvorgang des Getriebes orientieren. Beim Abrollen der Zahnräder besteht zwischen je einem oder je mehreren Zähnen der beiden Zahnräder Kontakt. Ohne Beschränkung der Allgemeinheit können die Vorgänge zwischen genau einem Zahn auf der Antriebsseite und genau einem Zahn auf der Abtriebseite betrachtet werden. Der Bereich eines Zahns, der während der Abrollung in Kontakt kommt, wird nachfolgend als Nutzflanke bezeichnet.

Für Stirnradgetriebe ist seit langem bekannt, welche Bedingungen die Nutzflanken erfüllen müssen, um einen kontinuierlichen Kontakt der Zähne in einem Stirnschnitt zu ermöglichen. Rein beispielhaft wird auf das Fachbuch "Maschinenelemente Band II" von G. Niemann und H. Winter, Springer Verlag, Berlin, 1985, verwiesen. Die entsprechenden Ausführungen finden sich insbesondere in den Seiten 32 bis 35 (= Kapitel 21.1.2) des genannten Fachbuches. Das dort beschriebene (ergänze: ebene) Verzahnungsgesetz ermöglicht zugleich auch die Kontrolle des Übersetzungsverhältnisses, das in der Regel konstant sein soll.

Wird ein Stirnrad im Stirnschnitt betrachtet, so ist die Nutzflanke eine ebene Kurve. Diese Kurve wird nachfolgend als Zahnprofillinie bezeichnet. Der geometrische Ort innerhalb der betrachteten Ebene, an dem sich die beiden Zahnprofillinien des Getriebes berühren, wird als Kontaktpunkt bezeichnet. Der Kontaktpunkt wandert während des Abrollens der beiden Zahnräder aneinander entlang eines Kontaktweges. Der Kontaktweg ist eine charakteristische Kontur. Das ebene Verzahnungsgesetz besagt, dass die beiden Zahnprofillinien im Kontaktpunkt eine gemeinsame Normale aufweisen müssen und dass diese Normale den Abstand der beiden Drehachsen im umgekehrten (reziproken) Verhältnis der Drehzahlen teilen muss. Der Schnittpunkt der Normalen mit der Verbindungslinie der beiden Rotationsachsen wird üblicherweise als Wälzpunkt bezeichnet.

Das ebene Verzahnungsgesetz stellt einen direkten Zusammenhang zwischen dem Kontaktweg einerseits und den Zahnprofillinien andererseits bei vorgegebenem Übersetzungsverhältnis in einem Stirnschnitt her. Dieser geometrische Zusammenhang kann in eine explizite analytische Rechnung überführt werden. Rein beispielhaft wird in diesem Zusammenhang auf den Fachaufsatz "Explicit Calculation Methods for Conjugate Profiles" von G. Bär, erschienen in Journal for Geometry and Graphics, Vol. 7 (2003), No. 2, S. 201 - 210, verwiesen.

Bei einem Stirnradgetriebe können die einzelnen Stirnschnitte unabhängig voneinander betrachtet werden. Insbesondere kann auch das ebene Verzahnungsgesetz in jedem Stirnschnitt erfüllt werden. Bei Stirnradgetrieben ist es daher ohne Weiteres möglich, einen Linienkontakt zu erreichen. Bei der bekanntesten Lösung, der so genannten Evolventenverzahnung, bildet der Kontaktweg in der betrachteten Ebene eine gerade Linie durch den Wälzpunkt.

Kegelradgetriebe weisen im Vergleich zu Stirnradgetrieben eine erheblich komplexere Abrollgeometrie auf. Eine einfache Übertragung der sich bei Stirnradgetrieben ergebenden Verzahnungen auf Kegelradgetriebe ist nicht ohne Weiteres möglich. Insbesondere weisen Kegelradgetriebe zwei sich schneidende Drehachsen auf. Der Schnittwinkel, unter dem die beiden Rotationsachsen sich schneiden, kann - innerhalb eines gewissen Rahmens - beliebig sein. Der Schnittwinkel liegt in Theorie und Praxis oftmals bei 90°. Verfolgt man die Bewegung eines Kontaktpunktpaares, so beschreiben zwar auch bei einem Kegelradgetriebe die beiden Kontaktpunkte jeweils einen Kreis. Im Gegensatz zu einem Stirnradgetriebe liegen diese beiden Kreise jedoch nicht in einer gemeinsamen Ebene. Der konstante (und gleiche) Abstand der beiden Kontaktpunkte zum Schnittpunkt der beiden Rotationsachsen hat jedoch zur Folge, dass die beiden Kreise auf einer gemeinsamen Kugeloberfläche liegen. Analog zu Stirnradgetrieben kann die Abrollung daher unabhängig von der Zahnbreite auf dieser Kugeloberfläche betrachtet werden. Eine derartige Betrachtung wird nachfolgend als Kugelschnitt bezeichnet. Ohne Beschränkung der Allgemeinheit kann die Analyse wieder für einen unendlich dünnen Zahn (also innerhalb des Kugelschnitts) erfolgen. Man spricht von einem Problem der sphärischen Kinematik.

Da die Abrollung der Nutzflanken aneinander kein Problem der ebenen Kinematik darstellt, kann das ebene Verzahnungsgesetz nicht angewendet werden. Es stellt sich daher die Frage nach der Auslegung der Nutzflanken der Kegelräder, welche gute Laufeigenschaften des Kegelradgetriebes bewirken.

Aus dem Fachaufsatz "On the generation of conjugate flanks for arbitrary gear geometries" von A. Johann und J. Scheurle, GAMM-Mitteilungen, Band 32 (2009), Heft 1, Seiten 61 bis 79 ist ein Verfahren bekannt, mittels dessen für beliebige Getriebe die konjugierten Zahnflanken der Zähne der miteinander kämmenden Zahnräder ermittelt werden können. Kegelradgetriebe sind in dem Fachaufsatz ausdrücklich mit genannt.

In der Praxis ist die Herstellung von Kegelrädern für Kegelradgetriebe historisch bedingt. Sie erfolgt mit Spezialmaschinen und Spezialwerkzeugen, welche maßgeblich für die Geometrie des jeweiligen Kegelrades verantwortlich sind. Es herrschen in aller Regel Einschränkungen vor, die keine freie Wahl der Zahnformen zulassen. Beispielsweise können die Spezialmaschinen kinematische Zwangsbedingungen aufweisen.

Es sind theoretische Überlegungen zur Form von Kegelradgetrieben bekannt, welche bereits zum Teil die Nutzflanken im Kugelschnitt betrachten. Rein beispielhaft wird auf das Fachbuch "Maschinenelemente Band III" von G. Niemann und H. Winter, Springer Verlag, Berlin, 1983, verwiesen, siehe insbesondere die Seiten 25 bis 32 (= Kapitel 24.3) des genannten Fachbuches.

Um die Geometrie der Nutzflanke festzulegen, wird beim genannten Stand der Technik ein ebenes Gegenrad, ein so genanntes Planrad, virtuell zur Abrollung gebracht. Das Planrad weist - analog zur Evolventenverzahnung von Stirnrädern - trapezförmige Zähne auf. Man spricht üblicherweise von einem trapezförmigen Bezugsprofil. Die dadurch entstehende Verzahnung des Kegelrades wird als Oktoidenverzahnung bezeichnet.

Weiterhin kommt auch eine Vereinfachung zum Einsatz, bei der die Betrachtung nicht im Kugelschnitt, sondern auf einem Ergänzungskegel erfolgt, der orthogonal auf dem Kegelrad steht. Diese Vorgehensweise ist im Stand der Technik als Tredgold' sche Näherung bekannt und beispielsweise in dem Fachbuch "Kegelräder: Grundlagen, Anwendungen" von J. Klingelnberg, Springer Verlag, Berlin, 2008, erläutert, siehe insbesondere Seiten 28 und 29 (= Kapitel 2.2.4.1) des genannten Fachbuches.

Die Tredgold'sche Näherung führt zu einer rechnerischen Ersatzverzahnung, bei welcher die Bedingungen im Kontaktbereich des Kegelradgetriebes durch ein Stirnradgetriebe angenähert werden. Das Ersatzstirnrad kann sodann wieder in einzelnen Stirnschnitten betrachtet werden. Rein beispielhaft wird für diese Vorgehensweise auf das Fachbuch "Grundzüge der Verzahnung" von A. K. Thomas, Carl Hanser Verlag, München, 1957, verwiesen, insbesondere auf die Seiten 28 und 29 (= Kapitel 4.1) des genannten Fachbuches. In die fertigungstechnische Praxis hat nur diese Näherung Eingang gefunden.

Bei der praktischen Herstellung von Kegelrädern wird daher nur eine Näherung an die Oktoidenverzahnung erzeugt, die aus den theoretischen Überlegungen bekannt ist. Durch die Ein- oder Zweiflankenbearbeitung des Kegelrades wird das Profil, je nach Herstellungsverfahren, nicht im sphärischen Schnitt aufgetragen und nicht mit zunehmendem Kugelradius vergrößert. Dadurch entsteht ein Verzahnungsprofil, das zu jedem Zeitpunkt nur noch einen Punktkontakt aufweist. Als Trajektorie des Kontaktpunktes entsteht ein eindimensionaler Kontaktweg, dessen Abstand vom Schnittpunkt der beiden Rotationsachsen mit der Rotation der Kegelräder variiert.

Auch die Herstellung der Nutzflanken durch die Abwicklung einer Kegelmantelfläche zur Erzeugung einer so genannten Kugelevolvente wurde im Stand der Technik bereits diskutiert. Es wird rein beispielhaft auf das bereits genannte Fachbuch von J. Klingelnberg verwiesen, siehe dort die Seite 29. Dieser Ansatz entspricht der geometrischen Erzeugung der Evolventenverzahnung von Stirnrädern durch die Abwicklung eines Kreisumfangs. Ebenso wie die Verwendung von Lösungsansätzen der sphärischen Kinematik wurde die Kugelevolventenform jedoch wegen der eingeschränkten Herstellbarkeit der Kegelräder nicht weiter verfolgt.

Kegelräder gelten im Stand der Technik als lauffähig, wenn das Verzahnungsgesetz gemäß der Tredgold'schen Näherung zu jedem Zeitpunkt der Abrollung in einem Stirnschnitt der Nutzflanke erfüllt ist. Betrachtet man die Abfolge der einzelnen Kontaktpunkte während der Abrollung, erhält man den Kontaktweg. Die Verzahnungen ermöglichen jedoch nur einen Punktkontakt.

Zur Optimierung der Laufeigenschaften von Kegelradgetrieben werden im Stand der Technik beispielsweise Makrogeometrieparameter der Verzahnung wie Zähnezahl, Modul, Zahnbreite usw. variiert. Rein beispielhaft wird hier auf die Dissertation "Rechnerische Analyse und Optimierung des Beanspruchungsverhaltens bogenverzahnter Kegelräder" von W. M. Schweicher, RWTH Aachen, 1994 verwiesen. Besonders relevant sind die Seiten 72 bis 86 (= Kapitel 7) der genannten Dissertation. Alternativ werden Einstellungen der erzeugenden Basismaschine variiert, siehe beispielsweise den Fachaufsatz "Optimal Machine Tool Setting for Hypoid Gears Improving Load Distribution" von V. Simon, ASME Journal of Mechanical Design 123, 2001. Auch ist bekannt, die Achsparameter einer Freiformbasismaschine zu variieren. Diesbezüglich wird auf die EP 1 773 530 B1 verwiesen. Mittels all diesen Optimierungen kann aber ebenfalls kein Linienkontakt erreicht werden.

Aus dem Fachaufsatz "Tooth Contact Shift in Loaded Spiral Bevel Gears" von M. Savage et al., Gear Technology 9 (1992), Nov./Dec., No. 6, Seiten 24 bis 31, ist ein Kegelradgetriebe bekannt, das ein erstes und ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken,
- wobei eine Wälzlinie mit der ersten Rotationsachse einen Wälzwinkel bildet, welcher der Beziehung

$$\tan \gamma = \frac{\sin \delta}{\omega_1 / \omega_2 + \cos \delta}$$

genügt, wobei $\gamma$ der Wälzwinkel, $\delta$ der Schnittwinkel, $\omega_1$ die erste Drehzahl und $\omega_2$ die zweite Drehzahl sind.

Aus dem Fachaufsatz "Algorithms for Involute and Octoidal Bevel-Gear Generation" von G. Figliolini und J. Angeles, Transactions of the ASME, Vol. 127, July 2005, Seiten 664 bis 672, ist ein Kegelradgetriebe bekannt, das ein erstes und ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken,

- wobei die ersten Zahnflanken der ersten Zähne und die zweiten Zahnflanken der zweiten Zähne für eine Vielzahl von auf den Achsschnittpunkt bezogenen Radien entlang eines auf den jeweiligen Radius bezogenen Kontaktweges aufeinander einwirken,
- wobei der auf den jeweiligen Radius bezogene Kontaktweg einer Abfolge von Kontaktpunkten entspricht, an denen während des Rotierens der beiden Kegelräder jeweils eine der ersten und der zweiten Zahnflanken aufeinander einwirken.

Aus dem Fachaufsatz "Korrekturverfahren für Kegelrad-Verzahnungen" von Dieter Wiener, Antriebstechnik 39 (2000), Nr. 6, Seiten 36 bis 40 und 137f, ist ein Kegelradgetriebe bekannt, das ein erstes und ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken.

Aus dem Fachaufsatz "5-Achsen-Fräsen ersetzt klassisches Verzahnen", Spanende Fertigung, Technische Rundschau Nr. 4/2010, Seiten 63 bis 66, ist ein Ermittlungsverfahren für Geometriedaten eines ersten Kegelrades eines Kegelradgetriebes bekannt, das zusätzlich zum ersten Kegelrad ein zweites Kegelrad aufweist,

- wobei das erste Kegelrad eine Anzahl von ersten Zähnen aufweist und im Betrieb mit einer ersten Drehzahl um eine erste Rotationsachse rotiert,
- wobei das zweite Kegelrad eine Anzahl von zweiten Zähnen aufweist und im Betrieb mit einer zweiten Drehzahl um eine zweite Rotationsachse rotiert,
- wobei die beiden Rotationsachsen sich unter Bildung eines Schnittwinkels in einem Achsschnittpunkt schneiden,
- wobei die beiden Kegelräder über erste Zahnflanken der ersten Zähne und zweite Zahnflanken der zweiten Zähne aufeinander einwirken,
- wobei der Rechner unter Verwendung der Zahnform der ersten Zahnflanken die Geometriedaten des ersten Kegelrades ermittelt und die Geometriedaten in einem Format abspeichert, anhand dessen ein Teileprogramm für eine Bearbeitungsmaschine mit mindestens fünf Achsen zum Herstellen des ersten Kegelrades automatisch generierbar ist, oder anhand der Geometriedaten direkt das entsprechende Teileprogramm generiert.

Die Aufgabe der vorliegenden Erfindung besteht darin, einfach zu realisierende Möglichkeiten zu schaffen, um bei einem Kegelradgetriebe beim Abrollen der Kegelräder des Kegelradgetriebes aneinander einen Linienkontakt zu erreichen.

Die Aufgabe wird durch ein Ermittlungsverfahren mit den Merkmalen des Anspruchs 1 gelöst. Vorteilhafte Ausgestaltungen des erfindungsgemäßen Ermittlungsverfahrens sind Gegenstand der abhängigen Ansprüche 2 bis 6.

Erfindungsgemäß ist vorgesehen, ein Ermittlungsverfahren der eingangs genannten Art dadurch auszugestalten,

- dass die Daten, anhand derer der Rechner die Zahnform der ersten Zahnflanken ermittelt, für eine Vielzahl von auf den Achsschnittpunkt bezogenen Radien-für einen auf den jeweiligen Radius bezogenen Kontaktweg charakteristisch sind,
- dass der auf den jeweiligen Radius bezogene Kontaktweg einer Abfolge von Kontaktpunkten entspricht, an denen während des Rotierens der beiden Kegelräder jeweils eine der ersten und der zweiten Zahnflanken aufeinander einwirken,
- dass der Rechner für diejenigen Radien, für die der jeweilige Kontaktweg definiert ist, die auf den jeweiligen Radius bezogene Zahnform der ersten Zahnflanken derart ermittelt, dass in allen auf den jeweiligen Radius bezogenen Kontaktpunkten die jeweils aufeinander einwirkenden ersten und zweiten Zahnflanken, bezogen auf den jeweiligen Radius, eine gemeinsame Normale aufweisen und dass in allen auf den jeweiligen Radius bezogenen Kontaktpunkten die jeweilige Normale einen auf den jeweiligen Radius bezogenen Wälzpunkt schneidet,
- dass der auf den jeweiligen Radius bezogene Wälzpunkt zwischen den beiden Rotationsachsen liegt, vom Achsschnittpunkt um den jeweiligen Radius beabstandet ist und mit der ersten Rotationsachse einen Wälzwinkel bildet, welcher der Beziehung

$$\tan \gamma = \frac{\sin \delta}{\omega_1 / \omega_2 + \cos \delta}$$

genügt, wobei $\gamma$ der Wälzwinkel, $\delta$ der Schnittwinkel, $\omega_1$ die erste Drehzahl und $\omega_2$ die zweite Drehzahl sind, und

- dass der Rechner unter Verwendung der von ihm ermittelten Zahnform der ersten Zahnflanken die Geometriedaten des ersten Kegelrades ermittelt und die Geometriedaten in einem Format abspeichert, anhand dessen ein Teileprogramm für eine Bearbeitungsmaschine mit mindestens fünf Achsen zum Herstellen des ersten Kegelrades automatisch generierbar ist, oder anhand der Geometriedaten direkt das entsprechende Teileprogramm generiert.

Bei dem erfindungsgemäßen Ermittlungsverfahren wird daher ein auf den Achsschnittpunkt bezogenes sphärisches Verzahnungsgesetz aufgestellt und in auf den Achsschnittpunkt bezogenen Kugeloberflächen gelöst. Die einzelnen Lösungen können unabhängig voneinander ermittelt werden. Sie sind bei ordnungsgemäßer Ermittlung derart aufeinander abgestimmt, dass die aufeinander einwirkenden Zahnflanken einen Linienkontakt aufweisen.

Die Kontaktwege können - innerhalb gewisser Grenzen - frei bestimmt werden und von Radius zu Radius variieren. Vorzugsweise ist der Kontaktweg jedoch im Kern für alle Radien der gleiche. Mit der Formulierung "im Kern der gleiche" ist gemeint, dass für zwei beliebige der Radien, für die ein jeweiliger Kontaktweg definiert ist, einer der beiden Kontaktwege durch eine auf den Achsschnittpunkt bezogene zentrische Streckung auf den anderen Kontaktweg oder einen den Wälzpunkt des anderen Kontaktweges enthaltenden Abschnitt des anderen Kontaktweges abbildbar ist.

Die Zahnform der ersten Zahnflanke, die Zahnform der zweiten Zahnflanke und der Kontaktweg sind - bezogen auf einen einzelnen Radius - eineindeutig (bijektiv) ineinander umrechenbar. Es ist daher nicht nur möglich, dass die Daten, die für die Vielzahl von auf den Achsschnittpunkt bezogenen Radien für die auf den jeweiligen Radius bezogenen Kontaktwege charakteristisch sind, die Kontaktwege selbst sind. Ebenso ist es alternativ möglich, dass die entsprechenden Daten die Zahnform der zweiten Zahnflanken sind.

In einer besonders bevorzugten Ausgestaltung der vorliegenden Erfindung liegen die Kontaktwege auf einem den jeweiligen Wälzpunkt enthaltenden Großkreis um den Achsschnittpunkt. Diese Verzahnung korrespondiert bei einem Stirnradgetriebe mit einer Evolventenverzahnung.

Alternativ ist es möglich, dass der Rechner die Daten, die für die Vielzahl von auf den Achsschnittpunkt bezogenen Radien für die auf den jeweiligen Radius bezogenen Kontaktwege charakteristisch sind, anhand von makroskopischen Solleigenschaften des Kegelradgetriebes selbsttätig ermittelt. Insbesondere ist es möglich, dass der Rechner zum Ermitteln der Daten, die für die Vielzahl von auf den Achsschnittpunkt bezogenen Radien für die auf den jeweiligen Radius bezogenen Kontaktwege charakteristisch sind, die Kontaktwege derart ermittelt, dass beim Rotieren der Kegelräder auftretende Reibungskräfte oder Abrollgeräusche minimal sind.

Die Aufgabe wird weiterhin durch ein Kegelradgetriebe mit den Merkmalen des Anspruchs 7 gelöst. Vorteilhafte Ausgestaltungen des erfindungsgemäßen Kegelradgetriebes sind Gegenstand der abhängigen Ansprüche 8 bis 10.

Erfindungsgemäß ist vorgesehen, ein Kegelradgetriebe der eingangs genannten Art dadurch auszugestalten,

- dass die ersten Zahnflanken der ersten Zähne und die zweiten Zahnflanken der zweiten Zähne für eine Vielzahl von auf den Achsschnittpunkt bezogenen Radien entlang eines auf den jeweiligen Radius bezogenen Kontaktweges aufeinander einwirken,
- dass der auf den jeweiligen Radius bezogene Kontaktweg einer Abfolge von Kontaktpunkten entspricht, an denen während des Rotierens der beiden Kegelräder jeweils eine der ersten und der zweiten Zahnflanken aufeinander einwirken,
- dass die Zahnform der ersten Zahnflanken für diejenigen Radien, für die der jeweilige Kontaktweg definiert ist, derart auf die Zahnform der zweiten Zahnflanken abgestimmt ist, dass in allen Kontaktpunkten die jeweils aufeinander einwirkenden ersten und zweiten Zahnflanken, bezogen auf den jeweiligen Radius, eine gemeinsame Normale aufweisen und dass in allen Kontaktpunkten die jeweilige Normale einen auf den jeweiligen Radius bezogenen Wälzpunkt schneidet, und
- dass der auf den jeweiligen Radius bezogene Wälzpunkt zwischen den beiden Rotationsachsen liegt, vom Achsschnittpunkt um den jeweiligen Radius beabstandet ist und mit der ersten Rotationsachse einen Wälzwinkel bildet, welcher der Beziehung

$$\tan \gamma = \frac{\sin \delta}{\omega_1 / \omega_2 + \cos \delta}$$

genügt, wobei $\gamma$ der Wälzwinkel, $\delta$ der Schnittwinkel, $\omega_1$ die erste Drehzahl und $\omega_2$ die zweite Drehzahl sind.

Die vorteilhaften Ausgestaltungen des Kegelradgetriebes entsprechen im Kern denjenigen des erfindungsgemäßen Ermittlungsverfahrens.

Weitere Vorteile und Einzelheiten ergeben sich aus der nachfolgenden Beschreibung von Ausführungsbeispielen in Verbindung mit den Zeichnungen. Es zeigen in Prinzipdarstellung:

| | |
|---|---|
| FIG 1 | schematisch ein Kegelradgetriebe mit zwei Kegelrädern, |
| FIG 2 und 3 | je eine perspektivische Darstellung eines Zahnes, |
| FIG 4 bis 6 | schematisch je einen Kugelschnitt, |
| FIG 7 | eine vergrößerte Darstellung eines Ausschnitts von FIG 6, |
| FIG 8 | ein Blockdiagramm und |
| FIG 9 und 10 | je ein Ablaufdiagramm. |

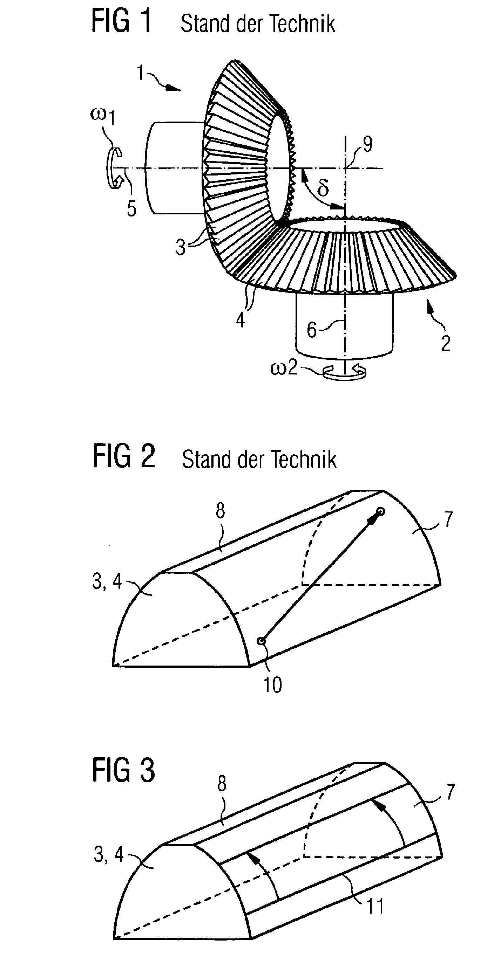

Gemäß FIG 1 weist ein Kegelradgetriebe zwei Kegelräder 1, 2 auf. Die Kegelräder 1, 2 weisen jeweils eine Anzahl von Zähnen 3, 4 auf. Die Anzahlen an Zähnen 3, 4 können gleich sein. In der Regel sind sie voneinander verschieden.

Die Kegelräder 1, 2 rotieren im Betrieb mit einer jeweiligen Drehzahl $\omega_1$, $\omega_2$ um jeweilige Rotationsachsen 5, 6. Die Kegelräder 1, 2 kämmen während des Rotierens miteinander. Sie wirken somit über Zahnflanken 7, 8 (siehe FIG 2 und 3) ihrer Zähne 3, 4 aufeinander ein. Die Drehzahlen $\omega_1$, $\omega_2$ sind daher über die Anzahlen von Zähnen 3, 4 miteinander gekoppelt.

Die Rotationsachsen 5, 6 sind nicht parallel zueinander. Sie liegen jedoch in einer gemeinsamen Ebene und schneiden sich in einem Achsschnittpunkt 9. Sie bilden im Achsschnittpunkt 9 einen Schnittwinkel $\delta$. Der Schnittwinkel $\delta$ beträgt oftmals 90°. Er kann jedoch ebenso größer als 90° sein oder kleiner als 90° sein.

Die Kegelräder 1, 2 sind in verschiedener Hinsicht gleichwertig. So ist beispielsweise gleichwertig, welches der Kegelräder 1, 2 das jeweils andere Kegelrad 2, 1 antreibt. Ebenso ist irrelevant, ob und ggf. welches der Kegelräder 1, 2 die größere Anzahl an Zähnen aufweist. Um die Kegelräder 1, 2 voneinander unterscheiden zu können, werden sie, soweit erforderlich, nachfolgend jedoch als erstes Kegelrad 1 und zweites Kegelrad 2 bezeichnet. Gleiches gilt auch für auf die Kegelräder 1, 2 bezogene Begriffe wie beispielsweise deren Zähne 3, 4, deren Rotationsachsen 5, 6 und deren Drehzahlen $\omega_1$, $\omega_2$.

FIG 2 zeigt einen einzelnen Zahn 3, 4 eines der Kegelräder 1, 2. Es kann sich alternativ um einen ersten Zahn 3 des ersten Kegelrades 1 oder um einen zweiten Zahn 4 des zweiten Kegelrades 2 handeln. Der Zahn 3, 4 weist die jeweilige Zahnflanke 7, 8 auf, mit welcher der jeweilige Zahn 3, 4 auf die Zahnflanke 8, 7 eines Zahnes 4, 3 des jeweils anderen Kegelrades 2, 1 einwirkt. Es besteht jeweils nur ein punktueller Kontakt zwischen den aufeinander einwirkenden Zahnflanken 7, 8. Der Punkt 10 - nachfolgend als Wirkpunkt 10 bezeichnet und in FIG 2 als kleiner Kreis eingezeichnet - wandert während des Rotierens des entsprechenden Kegelrades 1, 2 auf der Zahnflanke 7, 8. Dies ist in FIG 2 durch einen entsprechenden Pfeil angedeutet. Diese Art des Kontakts ist bei Kegelrädern 1, 2 des Standes der Technik realisiert.

FIG 3 zeigt ebenfalls einen einzelnen Zahn 3, 4. Analog zu FIG 2 kann es sich alternativ um einen ersten Zahn 3 des ersten Kegelrades 1 oder um einen zweiten Zahn 4 des zweiten Kegelrades 2 handeln. Der Zahn 3, 4 weist die jeweilige Zahnflanke 7, 8 auf, mit welcher der jeweilige Zahn 3, 4 auf die Zahnflanke 8, 7 eines Zahnes 4, 3 des jeweils anderen Kegelrades 2, 1 einwirkt. Im Gegensatz zu FIG 2 besteht bei der Zahnform gemäß FIG 3 jedoch jeweils entlang einer Linie 11 - nachfolgend Kontaktlinie 11 genannt - ein Kontakt zwischen aufeinander einwirkenden Zahnflanken 7, 8. Die Kontaktlinie 11 wandert während des Rotierens des entsprechenden Kegelrades 1, 2 zwar analog zum Wirkpunkt 10 von FIG 2 auf der entsprechenden Zahnflanke 7, 8. Dies ist in FIG 3 durch entsprechende Pfeile angedeutet. Die Kontaktlinie 11 bleibt während ihrer Wanderung jedoch als Linie erhalten.

Für Stirnradgetriebe (d.h. Getriebe, bei denen die Zahnräder im Wesentlichen zylindrisch ausgebildet sind und die Zähne auf den Mantelflächen der Zylinder angeordnet sind) sind Zahnformen, mittels derer ein derartiger Linienkontakt erreicht werden kann, seit langem bekannt. Rein beispielhaft wird die so genannte Evolventenverzahnung genannt. Bei Kegelradgetrieben sind derartige Zahnformen im Stand der Technik zwar in der Theorie bekannt, werden in der Praxis aber nicht hergestellt und eingesetzt.

Gegenstand der vorliegenden Erfindung ist ein einfach zu realisierendes und zu implementierendes Ermittlungsverfahren für die Geometriedaten mindestens eines der Kegelräder 1, 2 des Kegelradgetriebes, so dass auch bei dem Kegelradgetriebe ein Linienkontakt realisiert wird. Gegenstand der vorliegenden Erfindung ist weiterhin ein entsprechendes Kegelradgetriebe.

Zum Ermitteln der Geometriedaten eines der Kegelräder 1, 2 müssen selbstverständlich Grunddaten bekannt sein, wie beispielsweise die Lage der Rotationsachsen 5, 6, das gewünschte Übersetzungsverhältnis und andere makroskopische Geometrieparameter wie beispielsweise der maximale Durchmesser der Kegelräder 1, 2 und ihre Höhenerstreckung in Richtung der jeweiligen Rotationsachse 5, 6 gesehen. Die Bestimmung und Verwertung dieser Daten ist nicht Gegenstand der vorliegenden Erfindung. Auch die Frage, ob das Kegelradgetriebe eine eher grobe Verzahnung mit einigen wenigen relativ großen Zähnen 3, 4 oder eine eher feine Verzahnung mit einer größeren Anzahl kleinerer Zähne 3, 4 aufweisen soll, ist nicht Gegenstand der vorliegenden Erfindung. Gegenstand der vorliegenden Erfindung ist, wie die Gestalt (shape) der aufeinander einwirkenden Zahnflanken 7, 8 der Zähne 3, 4, die den gewünschten Linienkontakt bewirkt, auf einfache und elegante Weise ermittelt werden kann.

Es ist im Rahmen des Ermittlungsverfahrens weiterhin möglich, dass die Geometriedaten des zweiten Kegelrades 2 - insbesondere die Gestaltung von dessen Zahnflanken 8 - bereits gegeben sind. In diesem Fall werden ausschließlich die Geometriedaten des ersten Kegelrades 1 ermittelt. Alternativ ist es möglich, dass die Geometriedaten des zweiten Kegelrades 2 noch nicht gegeben sind. In diesem Fall können - analog zu den Geometriedaten des ersten Kegelrades 1 - im Rahmen des Ermittlungsverfahrens zusätzlich zu den Geometriedaten des ersten Kegelrades 1 auch die Geometriedaten des zweiten Kegelrades 2 ermittelt werden. Dies wird aus den weiteren Ausführungen ersichtlich werden.

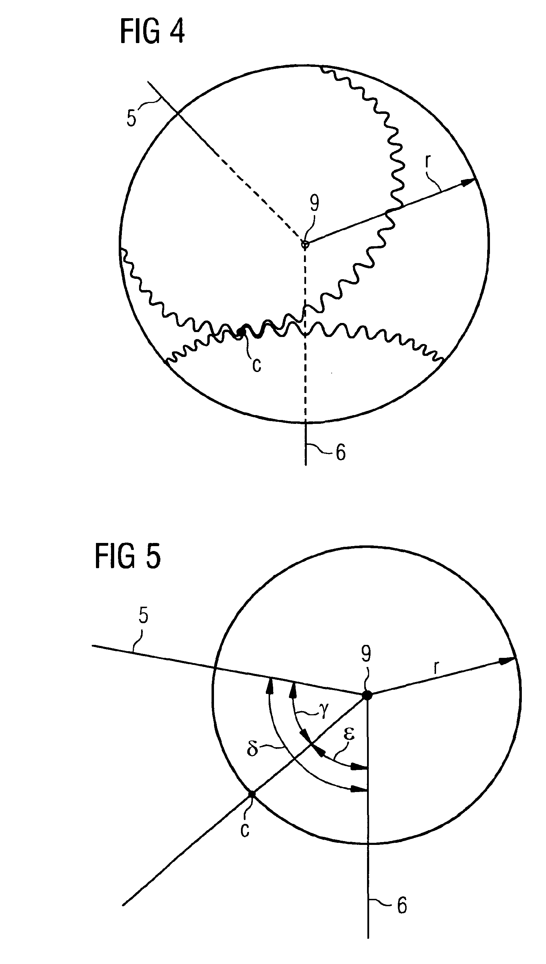

Um die Vorgehensweise der vorliegenden Erfindung näher zu erläutern, wird gemäß FIG 4 zunächst ein Kugelschnitt mit einem - prinzipiell beliebigen - Radius r um den Achsschnittpunkt 9 betrachtet. Der Kugelschnitt umfasst einen Teil des ersten Kegelrades 1, nämlich denjenigen Teil des ersten Kegelrades 1, der vom Achsschnittpunkt 9 den Abstand r aufweist. In analoger Weise umfasst der Kugelschnitt auch einen Teil des zweiten Kegelrades 2.

Weiterhin wird für den betrachteten Kugelschnitt ein Wälzpunkt c ermittelt. Der Wälzpunkt c liegt gemäß den FIG 4 und 5 ebenfalls auf dem betrachteten Kugelschnitt. Er weist also vom Achsschnittpunkt 9 ebenfalls den Abstand r auf. Der Wälzpunkt c liegt weiterhin zwischen den beiden Rotationsachsen 5, 6, also insbesondere innerhalb der durch die beiden Rotationsachsen 5, 6 definierten Ebene. Der Wälzpunkt c teilt den Schnittwinkel δ derart, dass der Wälzpunkt c - selbstverständlich mit dem Achsschnittpunkt 9 als gemeinsamem Scheitelpunkt - mit der ersten Rotationsachse 5 einen Wälzwinkel γ bildet. Der Wälzwinkel γ genügt der Beziehung

$$\tan\gamma = \frac{\sin\delta}{\omega_1/\omega_2 + \cos\delta} \ . \tag{1}$$

In analoger Weise bildet der Wälzpunkt c mit der zweiten Rotationsachse 6 einen Ergänzungswinkel ε gemäß der Beziehung

$$\tan\varepsilon = \frac{\sin\delta}{\omega_2/\omega_1 + \cos\delta} \ . \tag{2}$$

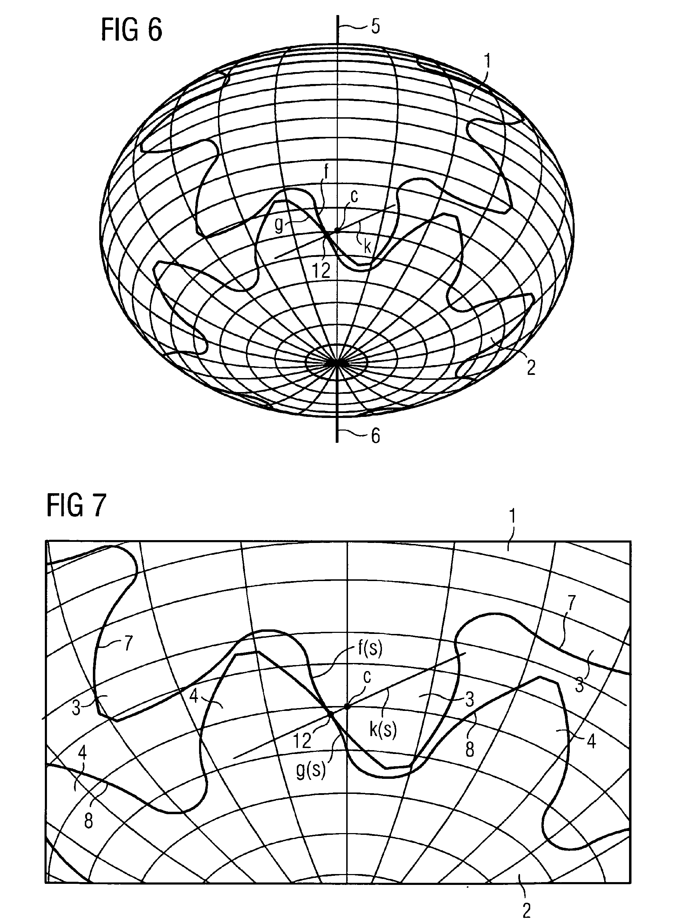

Selbstverständlich ergänzen sich der Wälzwinkel γ und der Ergänzungswinkel ε zum Schnittwinkel δ.
Es sei weiterhin angenommen, dass ein Kontaktweg k gegeben ist. Der Kontaktweg k ist ebenfalls auf den Radius r bezogen, verläuft also auf dem durch den Radius r definierten Kugelschnitt. FIG 6 zeigt rein beispielhaft einen derartigen Kontaktweg k. FIG 7 ist eine vergrößerte Darstellung eines Details von FIG 6.
Der Kontaktweg k entspricht einer Abfolge von Punkten, an denen sich die beiden durch den Kugelschnitt herausgegriffenen Teile der Kegelräder 1, 2 während des Rotierens der Kegelräder 1, 2 nach und nach berühren (= kontaktieren) sollen. Er entspricht also dem Abschnitt der Kugeloberfläche, entlang dessen eine der ersten Zahnflanken 7 auf eine der zweiten Zahnflanken 8 einwirken soll. Diese Punkte werden nachfolgend als Kontaktpunkte bezeichnet. Einer der Kontaktpunkte ist in den FIG 6 und 7 mit dem Bezugszeichen 12 versehen. Wie aus den FIG 6 und 7 ersichtlich ist, enthält der Kontaktweg k insbesondere den Wälzpunkt c.
Mit Ausnahme des singulären Falles, dass der Kontaktpunkt 12 mit dem Wälzpunkt c identisch ist, ist durch den Kontaktpunkt 12 und den Wälzpunkt c eine Gerade definiert. Eine den jeweiligen Kontaktpunkt 12 enthaltene Ebene, die orthogonal zu der genannten Gerade verläuft, ist daher ebenfalls eindeutig definiert. Ausgehend vom Kontaktpunkt 12 ist somit auf dem Kugelschnitt eine Linie definiert, die orthogonal zu der Geraden verläuft. Diese Linie entspricht - bezogen auf den betrachteten Kugelschnitt, also den betrachteten Radius r - dem Verlauf, welchen Konturlinien f, g der ersten und zweiten Zahnflanken 7, 8 im momentan betrachteten Kontaktpunkt 12 aufweisen müssen, damit innerhalb des betrachteten Kugelschnitts bei dem betrachteten Kontaktpunkt 12 eine gleichmäßige Kraftübertragung vom ersten auf das zweite Kegelrad 1, 2 (oder umgekehrt) erfolgt. Ist die genannte Bedingung für jeden Kontaktpunkt 12 entlang des Kontaktweges k erfüllt, erfüllt der betrachtete Kugelschnitt ein Verzahnungsgesetz, das nachfolgend als sphärisches Verzahnungsgesetz bezeichnet wird.
Mathematisch gesehen lässt sich der geforderte Sachverhalt wie folgt beschreiben: Der Kontaktweg k für einen bestimmten

Radius r lässt sich - ohne Beschränkung der Allgemeinheit - in Kugelkoordinaten (also dem Radius r und zwei Winkelkoordinaten $\vartheta$, $\varphi$) wie folgt schreiben:

$$k(s,r) = r \cdot \begin{pmatrix} \sin \vartheta_k(s,r) \cos \varphi_k(s,r) \\ \sin \vartheta_k(s,r) \sin \varphi_k(s,r) \\ \cos \vartheta_k(s,r) \end{pmatrix} . \tag{3}$$

Die Koordinaten r, $\vartheta$, $\varphi$ sind auf ein Koordinatensystem bezogen, dessen Ursprung der Achsschnittpunkt 9 ist. s ist ein Bahnparameter, der zusammen mit dem Radius r die zugehörigen Winkelkoordinaten $\vartheta$, $\varphi$ und damit den betrachteten Kontaktpunkt 12 eineindeutig (bijektiv) bestimmt. Die Winkelkoordinaten $\vartheta$, $\varphi$ sind also Funktionen des Radius r und des Bahnparameters s. Der Index bei den Winkelkoordinaten $\vartheta$, $\varphi$ stellt den Bezug zum Kontaktweg k her.

In analoger Weise lässt sich - bezogen auf eine einzelne Zahnflanke 7 eines Zahnes 3 des ersten Kegelrades 1 und bezogen auf den bereits mehrfach erwähnten Kugelschnitt - die Kontur der entsprechenden Zahnflanke 7 (also die Konturlinie f) bei ruhendem ersten Kegelrad 1 als Funktion desselben Bahnparameters s und des Radius r schreiben. Auch hier sind die Winkelkoordinaten $\vartheta$, $\varphi$ Funktionen des Radius r und des Bahnparameters s. Insbesondere gilt

$$f(s,r) = r \cdot \begin{pmatrix} \sin \vartheta_f(s,r) \cos \varphi_f(s,r) \\ \sin \vartheta_f(s,r) \sin \varphi_f(s,r) \\ \cos \vartheta_f(s,r) \end{pmatrix} . \tag{4}$$

Der Index bei den Winkelkoordinaten $\vartheta$, $\varphi$ stellt wieder den Bezug, hier zur Konturlinie f, her.

Rotiert das erste Kegelrad 1 und mit ihm die Konturlinie f mit der ersten Drehzahl $\omega_1$ um die erste Rotationsachse 5, ergibt sich der zeitabhängige Ort der Konturlinie f zu

$$f(s,r,t) = ROT(t) \cdot f(s,r) . \tag{5}$$

ROT(t) stellt die zeitabhängige Drehmatrix dar, welche die Drehung der betrachteten Konturlinie f beschreibt. Sie lässt sich schreiben als

$$ROT(t) = \begin{pmatrix} \cos \omega_1 t & \sin \omega_1 t & 0 \\ -\sin \omega_1 t & \cos \omega_1 t & 0 \\ 0 & 0 & 1 \end{pmatrix} . \tag{6}$$

Für die Drehmatrix ROT(t) wurde in diesem Zusammenhang ohne Beschränkung der Allgemeinheit angenommen, dass das erste Kegelrad 1 um die z-Achse des auf den Achsschnittpunkt 9 bezogenen Koordinatensystems rotiert.

Zum Ermitteln der Konturlinie f stehen zwei Bedingungen zur Verfügung. Zum einen gilt zu dem Zeitpunkt t, zu dem die (rotierende) erste Zahnflanke 7 einen bestimmten Kontaktpunkt 12 des Kontaktweges k erreicht, für diesen Kontaktpunkt 12 die Bedingung

$$f(s,r,t) = k(s,r) . \tag{7}$$

Mit anderen Worten: Zu dem betrachteten, wenn auch unbekanntem Kontaktzeitpunkt t befindet sich der korrespondierende Punkt der entsprechenden Konturlinie f an dem genannten Kontaktpunkt 12.

Weiterhin soll die Konturlinie f der ersten Zahnflanke 7 am Ort des betrachteten Kontaktpunktes 12 orthogonal zur Verbindungslinie des betrachteten Kontaktpunktes 12 und des Wälzpunktes c verlaufen. Es muss also - in Vektorschreibweise - weiterhin die Bedingung

$$\frac{\partial f(s,r,t)}{\partial s} \circ \big( k(s,r) - c(r) \big) = 0 \qquad (8)$$

erfüllt sein. Das Skalarprodukt der Ableitung der Konturlinie f nach dem Bahnparameter s mit dem Richtungsvektor vom betrachteten Kontaktpunkt 12 zum Wälzpunkt c muss also 0 sein.

Diese Bedingungen lassen sich in eine Kontaktzeitfunktion t(s,r) umrechnen, die jedem Kontaktpunkt 12 einen eindeutig definierten Kontaktzeitpunkt zuordnet, zu dem der betrachtete Kontaktpunkt 12 erreicht wird. Insbesondere ergibt sich die Kontaktzeitfunktion t(s,r) bei gegebenem Kontaktweg k(s,r) zu

$$t(s,r) = \int_{s_0}^{s} \frac{\frac{\partial k(\sigma,r)}{\partial \sigma} \circ \big[ k(\sigma,r) - c(r) \big]}{\omega_1 \big[ c_y(r) k_x(\sigma,r) - c_x(r) k_y(\sigma,r) \big]} d\sigma + t_0(r) \,. \qquad (9)$$

$s_0$ entspricht einem ersten Kontaktpunkt 12 des betrachteten Kontaktweges k, der von der betrachteten ersten Zahnflanke 7 zuerst erreicht wird. $t_0$ ist eine Integrationskonstante. Sie ist, wenn nur ein einzelner Kugelschnitt (d.h. Radius r = const.) betrachtet wird, prinzipiell frei wählbar.

Aufgrund der obigen Beziehungen ergibt sich im mitrotierenden Koordinatensystem des ersten Kegelrades 1 folgende Gleichung, die entlang des betrachteten Kontaktweges k gewährleistet, dass für jeden Kontaktpunkt 12 des betrachteten Kontaktweges k die Konturlinie f an der Stelle, an der sie momentan den Kontaktweg k kreuzt, orthogonal zur Verbindungslinie des Kontaktpunktes 12 und des Wälzpunktes c liegt:

$$f(s,r) = ROT^{-1}\big( t(s,r) \big) \cdot k(s,r) \,. \qquad (10)$$

$ROT^{-1}$ ist hierbei die inverse Drehmatrix zum Kontaktzeitpunkt t(s,r). Ausgeschrieben ergibt sich die inverse Drehmatrix $ROT^{-1}$ zu

$$ROT^{-1}\big( t(s,r) \big) = \begin{pmatrix} \cos \omega_1 t(s,r) & -\sin \omega_1 t(s,r) & 0 \\ \sin \omega_1 t(s,r) & \cos \omega_1 t(s,r) & 0 \\ 0 & 0 & 1 \end{pmatrix} \,. \qquad (11)$$

Wenn für eine Vielzahl von Radien r der jeweilige Kontaktweg k(s,r) gegeben ist, ist somit auch die Gesamtheit der Konturlinien f(s,r) der betrachteten ersten Zahnflanke 7 eindeutig bestimmt. Sie ergibt sich im mitrotierenden Koordinatensystem des ersten Kegelrades 1 durch die obigen Gleichungen 10 und 11.

In analoger Weise lässt sich die Konturlinie g(s,r) für die zweiten Zahnflanken 8 der zweiten Zähne 4 des zweiten Kegelrades 7 ermitteln.

Ein Paar aufeinander einwirkender Zahnflanken 7, 8, die obigen Gleichungen genügen, gewährleisten im Zusammenwirken einen dauerhaften Linienkontakt beim Abrollen.

In der Kontaktzeitfunktion t(s,r) ist für jeden Kugelschnitt implizit die jeweilige Integrationskonstante $t_0(r)$ enthalten. Die Integrationskonstante $t_0(r)$ kann für alle Radien r dieselbe sein. In diesem Fall sind die Kegelräder 1, 2 gerade verzahnt. Wenn die Integrationskonstante $t_0(r)$ eine lineare Funktion des Radius r ist, sind die Kegelräder 1, 2 schräg verzahnt. Wenn die Integrationskonstante $t_0(r)$ eine Kurve ist, sind die Kegelräder 1, 2 gebogen verzahnt.

Aus den obigen Ausführungen ist ersichtlich, dass in dem Fall, dass für eine Vielzahl von Radien r der auf den jeweiligen Radius r bezogene Kontaktweg k bekannt ist, aus dem Kontaktweg k - für den betrachteten Kugelschnitt - die Zahnform der ersten und der zweiten Zahnflanken 7, 8 eindeutig ermittelbar ist. Wie ohne weiteres erkennbar ist, ist die Vorgehensweise, bei der von dem Kontaktweg k ausgegangen wird und daraus die Konturlinie f der ersten Zahnflanke 7 ermittelt wird, ohne weiteres invertierbar. Wenn daher umgekehrt die Zahnform der ersten Zahnflanke 7 gegeben ist, lässt sich daraus der Kontaktweg k für jeden entsprechenden Radius r ermitteln. Aus den Kontaktwegen k lässt sich dann wiederum die Zahnform der zweiten Zahnflanke 8 der Zähne 4 des zweiten Kegelrades 2 eindeutig bestimmen. Analoge Ausführungen gelten selbstverständlich, wenn von den Konturlinien $g(s,r)$ der zweiten Zahnflanken 8 ausgegangen wird. Es reicht also aus, wenn für eine Vielzahl von Radien r jeweils eine der drei Kurven

- Konturlinie f der ersten Zahnflanke 7,
- Konturlinie g der zweiten Zahnflanke 8 und
- Kontaktweg k der beiden Zahnflanken 7, 8

bekannt ist. Die beiden anderen Kurven können aus der einen bekannten Kurve eindeutig ermittelt werden. Der einzige noch verbleibende Freiheitsgrad ist die Frage, ob die Kegelräder 1, 2 gerade, schräg oder gebogen verzahnt sein sollen. Dieser Freiheitsgrad ist durch Vorgabe eines funktionalen Verlaufs der Integrationskonstanten $t_0(r)$ als Funktion des betrachteten Radius r festlegbar.

Aus den obigen Ausführungen ist weiterhin ersichtlich, dass die für einen bestimmten Radius r ermittelte Lösung ohne weiteres 1:1 auf andere Radien r übertragen werden kann. Es ist also insbesondere möglich, dass für zwei beliebige der Radien r, für die ein jeweiliger Kontaktweg k definiert ist, einer der beiden Kontaktwege k durch eine auf den Achsschnittpunkt 9 bezogene zentrische Streckung auf den anderen Kontaktweg k abgebildet wird. Zwingend ist dies jedoch nicht erforderlich.

Zum einen ist es möglich, dass sich - skaliert auf einen einheitlichen Radius - die Kontaktwege nicht gleich weit vom (mitskalierten) Wälzpunkt weg erstrecken. Insbesondere ist es möglich, dass diejenigen Kontaktwege k, die von den minimalen und/oder maximalen Radien r auf den einheitlichen Radius skaliert werden, im skalierten Zustand kürzer sind als Kontaktwege k, die von mittleren Radien r auf den einheitlichen Radius skaliert werden. In diesem Fall wird lediglich ein Kontaktweg k (nämlich der kleinere Kontaktweg) auf einen Abschnitt des anderen (größeren) Kontaktweges k abgebildet.

Zum anderen ist es nicht zwingend erforderlich, den Kontaktweg k für alle Radien r in Bezug auf die Winkelkoordinaten $\vartheta$, $\varphi$ in gleicher Weise vorzugeben. Insbesondere kann in Bezug auf die Winkelkoordinaten $\vartheta$, $\varphi$ beispielsweise für einen ersten Radius r ein erster Kontaktweg k vorgegeben sein, für einen zweiten Radius r ein zweiter Kontaktweg k. In diesem Fall können beispielsweise die Kontaktwege k für Radien r, die zwischen dem ersten und dem zweiten Radius r liegen, in Bezug auf die Winkelkoordinaten $\vartheta$, $\varphi$ allmählich vom ersten zum zweiten Kontaktweg k überführt werden. Der Begriff "allmählich" bedeutet in diesem Zusammenhang einen stetigen Übergang als Funktion des Radius r. Vorzugsweise ist der Übergang sogar differenzierbar, insbesondere stetig differenzierbar.

Im Falle einer einheitlichen Vorgabe für alle Radien r können die Kontaktwege k beispielsweise, wie in den FIG 6 und 7 dargestellt, auf einem den jeweiligen Wälzpunkt c enthaltenden Großkreis um den Achsschnittpunkt 9 liegen. In diesem Fall kann der jeweilige Kontaktweg $k(s,r)$ als

$$k(s,r) = r \begin{pmatrix} \cos\alpha\cos s \\ -\sin\gamma\sin s + \cos\gamma\sin\alpha\cos s \\ \cos\gamma\sin s + \sin\gamma\sin\alpha\cos s \end{pmatrix} \qquad (12)$$

dargestellt werden. $\alpha$ ist in Gleichung 12 ein - in Grenzen - frei wählbarer Parameter. Er gibt die Schrägstellung des Großkreises an.

Bei einem Großkreis ergibt sich die Kontaktzeitfunktion $t(s,r)$ als lineare Funktion. Insbesondere ergibt sie sich bei obiger Darstellung zu

$$t(s,r) = \frac{s_0 - s}{\omega_1 \sin\gamma\sin\alpha} + t_0 \; .\qquad (13)$$

Unter der - zulässigen - Annahme, dass die Integrationskonstante $t_0$ den Wert 0 aufweist, ergibt sich die erste Konturlinie $f(s,r)$ somit durch einfaches Einsetzen von $t(s,r)$ in die inverse Drehmatrix $ROT^{-1}$ und Durchführen der Matrizenmultiplikation.

Nach diesen grundsätzlichen Ausführungen zu den mathematisch-physikalischen Grundlagen der vorliegenden Erfindung wird nunmehr das erfindungsgemäße Ermittlungsverfahren für die Geometriedaten des ersten Kegelrades 1 näher erläutert. Hierbei wird nur auf die erfindungsrelevanten Merkmale näher eingegangen.

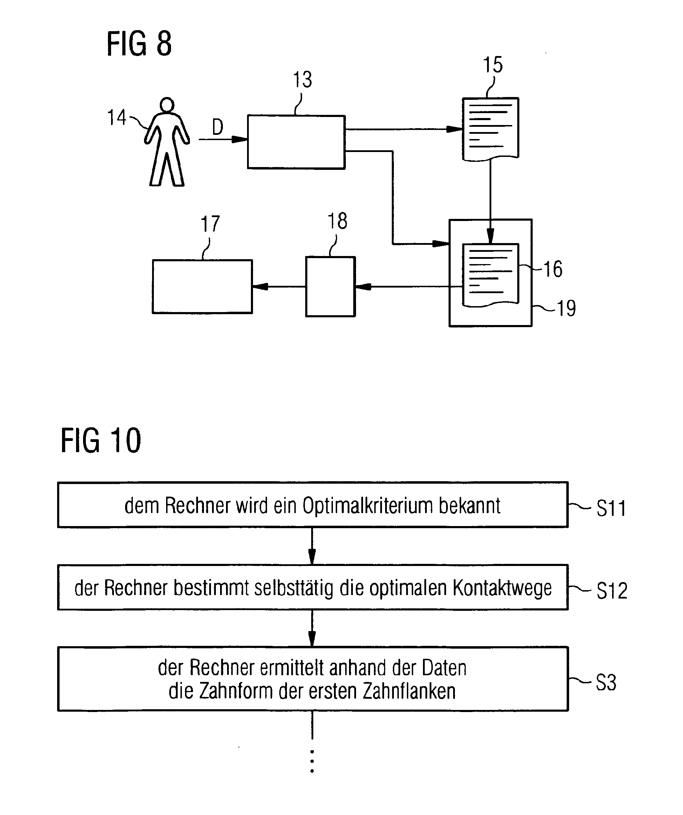

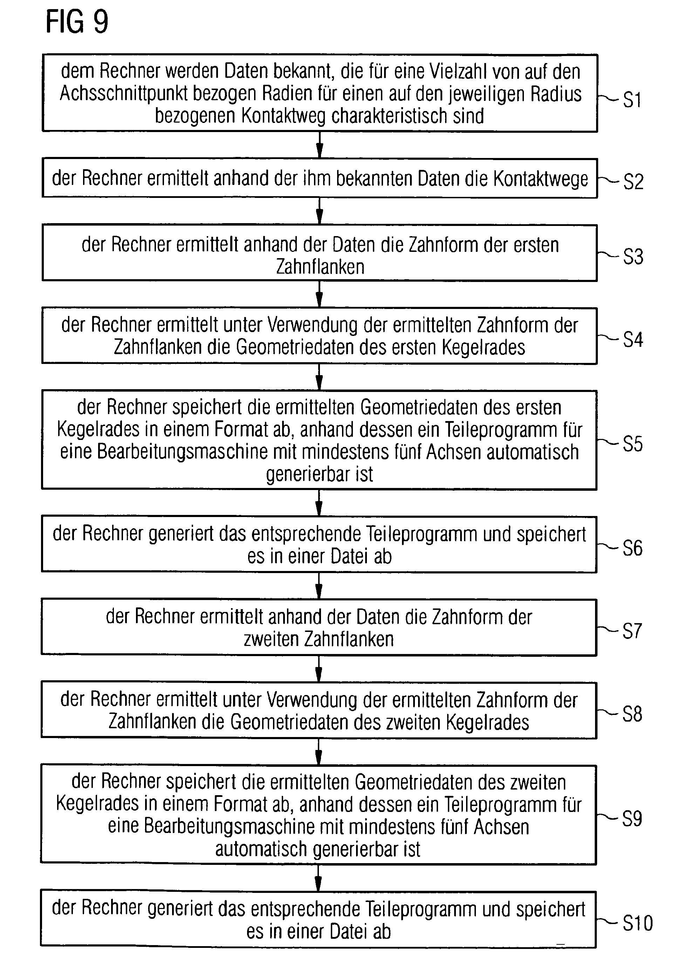

Gemäß den FIG 8 und 9 werden einem Rechner 13 in einem Schritt S1 Daten D bekannt. Die Daten D sind für eine Vielzahl von Radien r für einen auf den jeweiligen Radius r bezogenen Kontaktweg k charakteristisch. Die Radien r sind auf den Achsschnittpunkt 9 bezogen.

Es ist möglich, dass der Rechner 13 die Daten D selbsttätig ermittelt. Darauf wird später näher eingegangen. Alternativ ist es möglich, dass die Daten D dem Rechner 13 von außen vorgegeben werden, sei es als manuelle Eingaben eines Anwenders 14, sei es beispielsweise durch Vermessen des zweiten Kegelrades 2. Auch Mischformen sind möglich.

Wie bereits in Verbindung mit den mathematisch-physikalischen Grundlagen ausgeführt, können die Daten D mit den Kontaktwegen k selbst identisch sein. Alternativ können die Daten D die Zahnform der zweiten Zahnflanken 8 sein. Im letztgenannten Fall kann zusätzlich ein Schritt S2 vorhanden sein, in dem der Rechner 13 anhand der ihm bekannten Daten D explizit die Kontaktwege k ermittelt.

Es kann sich alternativ um andere Daten handeln, sofern die Daten D von der Zahnform der ersten Zahnflanken 7 verschieden sind. Denn genau diese Daten - also die Zahnform der ersten Zahnflanken 7 - sollen vom Rechner 13 ermittelt werden. Auch in dem Fall, dass die Daten D zwar für die Kontaktwege k charakteristisch sind, aber weder mit den Kontaktwegen k noch mit der Zahnform der zweiten Zahnflanken 8 identisch sind, kann der Schritt S2 - entsprechend angepasst - vorhanden sein.

In einem Schritt S3 ermittelt der Rechner 13 anhand der Daten D - also explizit oder implizit anhand der gegebenen Kontaktwege k - die Zahnform der ersten Zahnflanken 7. Insbesondere ermittelt der Rechner 13 im Schritt S3 für diejenigen Radien r, für welche der jeweilige Kontaktweg k definiert ist, die entsprechenden Konturlinien f der ersten Zahnflanken 7 derart, dass das obenstehend ausführlich hergeleitete und erläuterte sphärische Verzahnungsgesetz erfüllt ist.

In einem Schritt S4 ermittelt der Rechner 13 unter Verwendung der im Schritt S3 ermittelten Zahnform der Zahnflanken 7 der Zähne 3 des ersten Kegelrades 1 die Geometriedaten des ersten Kegelrades 1. In die Ermittlung des Schrittes S3 gehen (unter anderem) auch die anderen, makroskopischen Geometrieparameter des ersten Kegelrades 1 ein. Insbesondere ermittelt der Rechner 13 die Zahnform der Zahnflanken 7 der ersten Zähne 3 in aller Regel nur ein einziges Mal, wendet sie jedoch mehrmals an, nämlich entsprechend der Anzahl an ersten Zähnen 3 des ersten Kegelrades 1.

In einem Schritt S5 speichert der Rechner 13 die von ihm ermittelten Geometriedaten des ersten Kegelrades 1 ab. Er speichert die Geometriedaten in einer Datei 15 in einem Format ab, anhand dessen ein Teileprogramm 16 für eine Bearbeitungsmaschine 17 automatisch generierbar ist. Vor der Ausführung des Schrittes S5 kann der Rechner 13 beispielsweise die ermittelten Geometriedaten umsortieren. Insbesondere kann der Rechner 13 die Geometriedaten derart umsortieren, dass sie nicht mehr nach auf den Achsschnittpunkt 9 bezogenen Radien r sortiert sind, sondern in Linien sortiert sind, die im wesentlichen - bezogen auf den Achsschnittpunkt 9 - radial verlaufen, also auf den Achsschnittpunkt 9 zu oder von ihm weg gerichtet sind. Denn die Bearbeitung durch die Bearbeitungsmaschine 17 erfolgt oftmals entlang derartiger Linien. Weiterhin ist es möglich, dass der Rechner 13 die Geometriedaten derart abspeichert, dass bei der Bearbeitung des Kegelradrohlings für das erste Kegelrad 1 ein Bearbeitungswerkzeug der Bearbeitungsmaschine 17 - beispielsweise ein Fräs- oder Schleifkopf - entlang der oben genannten Linien ausschließlich auf den Achsschnittpunkt 9 zu (oder von ihm weg) verfahren wird. Die jeweils andere Verfahrbewegung dient in diesem Fall nur einem Rückholen des Bearbeitungswerkzeugs.

Die Bearbeitungsmaschine 17 weist mindestens fünf Achsen auf, nämlich mindestens 3 Linearachsen und mindestens 2 Rundachsen (oder gleichwertige Lageregelungen in den genannten Freiheitsgraden). Spindelachsen, die im Wesentlichen dem Rotieren dienen, also drehzahlgeregelt, nicht aber lagegeregelt betrieben werden, zählen in diesem Zusammenhang nicht als Achsen der Bearbeitungsmaschine 17.

Das Abarbeiten des Teileprogramms 16 durch eine numerische Steuereinrichtung 18 der Bearbeitungsmaschine 17 bewirkt eine punktuelle Bearbeitung des Kegelradrohlings für das erste Kegelrad 1. Beispielsweise kann ein Fräsen oder ein Schleifen erfolgen. Die Genauigkeit der Bearbeitung kann nach Bedarf bestimmt werden. Sie kann ggf. bereits durch die Geometriedaten des ersten Kegelrades 1 bestimmt sein. Im Gesamtergebnis bewirkt das Abarbeiten des Teileprogramms 16 das Herstellen des ersten Kegelrades 1.

Alternativ oder zusätzlich zum Schritt S5 kann ein Schritt S6 vorhanden sein. Falls der Schritt S6 vorhanden ist, generiert der Rechner 13 selbst das entsprechende Teileprogramm 16 und speichert es in einer Datei 19 ab.

Falls die Daten D, die im Schritt S1 dem Rechner 13 bekannt werden, von der Zahnform der zweiten Zahnflanken 8 der Zähne 4 des zweiten Kegelrades 2 verschiedene Daten sind, können - zusätzlich zu den Schritten S3 bis S6 - weitere Schritte S7 bis S10 vorhanden sein. Die Schritte S7 bis S10 korrespondieren in diesem Fall inhaltlich mit den Schritten S3 bis S6, sind jedoch auf das zweite Kegelrad 2 bezogen. Falls die Schritte S7 bis S10 vorhanden sind,

- ermittelt der Rechner 13 im Schritt S7 anhand der ihm bekannten Daten D die Zahnform der zweiten Zahnflanken 8,

- ermittelt der Rechner 13 anhand der im Schritt S7 ermittelten Zahnformen die Geometrieparameter des zweiten Kegelrades 2,
- speichert der Rechner 13 im Schritt S9 die Geometriedaten des zweiten Kegelrades 2 in dem entsprechenden Format ab, so dass ein Teileprogramm automatisch generierbar ist und
- generiert der Rechner 13 im Schritt S10 selbst das Teileprogramm und speichert es in einer Datei ab.

Wie bereits erwähnt, ist es möglich, dass die Kontaktwege k dem Rechner 13 direkt oder indirekt - vorgegeben sind oder vorgegeben werden. Alternativ ist es möglich, dass der Rechner 13 die hierfür charakteristischen Daten D selbsttätig ermittelt. Dies wird nachfolgend in Verbindung mit FIG 10 näher erläutert.

Bei FIG 10 sind die Schritte S1 und S2 von FIG 9 durch Schritte S11 und S12 ersetzt. Im Schritt S11 wird dem Rechner 13 ein Optimalkriterium bekannt. Beispielsweise kann dem Rechner 13 vom Anwender 14 vorgegeben werden, dass er die Kontaktwege k derart ermitteln soll, dass beim Rotieren der Kegelräder 1, 2 auftretende Reibungskräfte oder Abrollgeräusche minimiert werden. Auch andere Optimalkriterien sind möglich. Im Schritt S12 bestimmt der Rechner 13 selbsttätig die optimalen Kontaktwege k.

Sodann folgen die Schritte S3 bis S6 und evtl. auch S7 bis S10. Die Schritte S3 bis S10 werden nachfolgend nicht nochmals erläutert, da diese Schritte bereits in Verbindung mit FIG 9 erläutert wurden.

Wenn das Teileprogramm 16 von der Bearbeitungsmaschine 17 mit mindestens fünf Achsen abgearbeitet wird, wird von der Bearbeitungsmaschine 17 das erste Kegelrad 1 hergestellt. Die Herstellung entspricht - aufgrund der entsprechenden Ermittlung des Teileprogramms 16 - den Eigenschaften, die der Ermittlung des Teileprogramms 16 zugrunde gelegt wurden. Insbesondere wirken die ersten Zahnflanken 7 der ersten Zähne 3 und die zweiten Zahnflanken 8 der zweiten Zähne 4 des entsprechenden Kegelradgetriebes für eine Vielzahl von Radien r (diese jeweils auf den Achsschnittpunkt 9 bezogen) entlang des jeweiligen Kontaktweges k(s,r) aufeinander ein. Die Zahnformen der ersten und zweiten Zahnflanken 7, 8 sind für diese Radien r derart aufeinander abgestimmt, dass für alle Radien r entlang des jeweiligen Kontaktweges k jeweils Kontakt zwischen den ersten Zahnflanken 7 und den zweiten Zahnflanken 8 besteht. Insbesondere sind die Zahnformen der ersten und zweiten Zahnflanken 7, 8 für diese Radien r derart aufeinander abgestimmt, dass in allen Kontaktpunkten 12 der Kontaktwege k die jeweils aufeinander einwirkenden ersten und zweiten Zahnflanken 7, 8 bezogen auf den jeweiligen Radius r eine gemeinsame Normale aufweisen, die den auf den jeweiligen Radius r bezogenen Wälzpunkt c scheidet. Dadurch ergibt sich, bezogen auf die Zahnflanken 7, 8, der angestrebte Linienkontakt. Die (realen) Kontaktwege k entsprechen - selbstverständlich - denjenigen Kontaktwegen k, die der Berechnung der Zahnflanken 7, 8 zugrunde gelegt wurden.

Die vorliegende Erfindung wurde oben stehend in Verbindung mit Kegelrädern 1, 2 geschildert, deren Zähne 3, 4 je eine (Zahlwort) Zahnflanke 7, 8 aufweisen, die mit den Zahnflanken 8, 7 der Zähne 4, 3 des jeweils anderen Kegelrades 2, 1 zusammenwirkt. Für manche Anwendungen wirken jedoch beide Zahnflanken 7, 8 der Zähne 3, 4 miteinander zusammen, also beispielsweise bezogen auf einen bestimmten ersten Zahn 3 sowohl dessen vordere als auch dessen hintere Zahnflanke 7. Ein Beispiel einer derartigen Anwendung ist ein Getriebe, das mit einer elektrischen Maschine zusammenwirkt, die alternativ motorisch oder generatorisch betrieben wird. Ein weiteres Beispiel ist ein Kegelradgetriebe, das mit einer Verbrennungskraftmaschine zusammenwirkt, die teilweise auch als Motorbremse eingesetzt wird (beispielsweise beim Bergabfahren eines Kraftfahrzeugs). Auch andere Ausgestaltungen, sind denkbar. Beispielsweise kann bei einem elektrischen Antrieb eine Drehrichtungsumkehr erfolgen.

Wenn die Zähne 3, 4 der Kegelräder 1, 2 je zwei Zahnflanken 7, 8 aufweisen, die mit den Zahnflanken 8, 7 der Zähne 4, 3 des jeweils anderen Kegelrades 2, 1 zusammenwirken, sind die oben stehend erläuterten Ermittlungsverfahren selbstverständlich ebenfalls anwendbar. Sie müssen lediglich für beide Zahnflanken 7 des jeweiligen ersten Zahnes 3 und ggf. auch für beide Zahnflanken 8 jedes zweiten Zahns 4 angewendet werden.

Wenn im Rahmen der Herstellung des ersten Kegelrades 1 (also im Rahmen der Abarbeitung des Teileprogramms 16) beide Zahnflanken 7 der Zähne 3 des ersten Kegelrades 1 bearbeitet werden sollen, ist es insbesondere möglich, die vorderen Zahnflanken 7 zu bearbeiten, während das Bearbeitungswerkzeug der Bearbeitungsmaschine 17 entlang der jeweiligen Linie auf den Achsschnittpunkt 9 zu bewegt wird, und die hinteren Zahnflanken 7 dann zu bearbeiten, wenn das Bearbeitungswerkzeug der Bearbeitungsmaschine 17 entlang der jeweiligen Linie vom Achsschnittpunkt 9 weg bewegt wird. Diese Vorgehensweise kann fertigungstechnische Vorteile aufweisen.

Die vorliegende Erfindung weist viele Vorteile auf. Insbesondere ergibt sich aufgrund des Linienkontakts eine gleichmäßigere Kraftübertragung und eine geringere Materialbeanspruchung des Kegelradgetriebes. Weiterhin ermöglicht das erfindungsgemäße Ermittlungsverfahren die Optimierung des Kegelradgetriebes in Bezug auf gewünschte makroskopische Parameter, wie beispielsweise Geräuschentwicklung oder Reibungsverluste.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Patentansprüche**

1. Ermittlungsverfahren für Geometriedaten eines ersten Kegelrades (1) eines Kegelradgetriebes, das zusätzlich zum ersten Kegelrad (1) ein zweites Kegelrad (2) aufweist,

   - wobei das erste Kegelrad (1) eine Anzahl von ersten Zähnen (3) aufweist und im Betrieb mit einer ersten Drehzahl ($\omega_1$) um eine erste Rotationsachse (5) rotiert,
   - wobei das zweite Kegelrad (2) eine Anzahl von zweiten Zähnen (4) aufweist und im Betrieb mit einer zweiten Drehzahl ($\omega_2$) um eine zweite Rotationsachse (6) rotiert,
   - wobei die beiden Rotationsachsen (5, 6) sich unter Bildung eines Schnittwinkels ($\delta$) in einem Achsschnittpunkt (9) schneiden,
   - wobei die beiden Kegelräder (1, 2) über erste Zahnflanken (7) der ersten Zähne (3) und zweite Zahnflanken (8) der zweiten Zähne (4) aufeinander einwirken,
   - wobei ein Rechner (13) anhand von von der Zahnform der ersten Zahnflanken (7) verschiedenen Daten (D) eine Zahnform der ersten Zahnflanken (7) ermittelt,
   - wobei die Daten (D) für eine Vielzahl von auf den Achsschnittpunkt (9) bezogenen Radien (r) für einen auf den jeweiligen Radius (r) bezogenen Kontaktweg (k) charakteristisch sind,
   - wobei der auf den jeweiligen Radius (r) bezogene Kontaktweg (k) einer Abfolge von Kontaktpunkten (12) entspricht, an denen während des Rotierens der beiden Kegelräder (1, 2) jeweils eine der ersten und der zweiten Zahnflanken (7, 8) aufeinander einwirken,
   - wobei der Rechner (13) für diejenigen Radien (r), für die der jeweilige Kontaktweg (k) definiert ist, die auf den jeweiligen Radius (r) bezogene Zahnform der ersten Zahnflanken (7) derart ermittelt, dass in allen auf den jeweiligen Radius (r) bezogenen Kontaktpunkten (12) die jeweils aufeinander einwirkenden ersten und zweiten Zahnflanken (7, 8), bezogen auf den jeweiligen Radius (r) eine gemeinsame Normale aufweisen und dass in allen auf den jeweiligen Radius (r) bezogenen Kontaktpunkten (12) die jeweilige Normale einen auf den jeweiligen Radius (r) bezogenen Wälzpunkt (c) schneidet,
   - wobei der auf den jeweiligen Radius (r) bezogene Wälzpunkt (c) zwischen den beiden Rotationsachsen (5, 6) liegt, vom Achsschnittpunkt (9) um den jeweiligen Radius (r) beabstandet ist und mit der ersten Rotationsachse (5) einen Wälzwinkel ($\gamma$) bildet, welcher der Beziehung

$$\tan \gamma = \frac{\sin \delta}{\omega_1 / \omega_2 + \cos \delta}$$

   genügt, wobei $\gamma$ der Wälzwinkel, $\delta$ der Schnittwinkel, $\omega_1$ die erste Drehzahl und $\omega_2$ die zweite Drehzahl sind, und
   - wobei der Rechner (13) unter Verwendung der von ihm ermittelten Zahnform der ersten Zahnflanken (7) die Geometriedaten des ersten Kegelrades (1) ermittelt und die Geometriedaten in einem Format abspeichert, anhand dessen ein Teileprogramm (16) für eine Bearbeitungsmaschine (17) mit mindestens fünf Achsen zum Herstellen des ersten Kegelrades (1) automatisch generierbar ist, oder anhand der Geometriedaten direkt das entsprechende Teileprogramm (16) generiert.

2. Ermittlungsverfahren nach Anspruch 1,
   **dadurch gekennzeichnet, dass** für zwei beliebige der Radien (r), für die ein jeweiliger Kontaktweg (k) definiert ist, einer der beiden Kontaktwege (k) durch eine auf den Achsschnittpunkt (9) bezogene zentrische Streckung auf den anderen Kontaktweg (k) oder einen den Wälzpunkt (c) des anderen Kontaktweges (k) enthaltenden Abschnitt des anderen Kontaktweges (k) abbildbar ist.

3. Ermittlungsverfahren nach Anspruch 1 oder 2,
   **dadurch gekennzeichnet, dass** die Daten (D), die für die Vielzahl von auf den Achsschnittpunkt (9) bezogenen Radien (r) für die auf den jeweiligen Radius (r) bezogenen Kontaktwege (k) charakteristisch sind, die Kontaktwege (k) selbst sind oder die Zahnform der zweiten Zahnflanken (8) sind.

4. Ermittlungsverfahren nach Anspruch 1, 2 oder 3,
   **dadurch gekennzeichnet, dass** die Kontaktwege (k) auf einem den jeweiligen Wälzpunkt (c) enthaltenden Großkreis um den Achsschnittpunkt (9) liegen.

**5.** Ermittlungsverfahren nach Anspruch 1, 2 oder 3,
**dadurch gekennzeichnet, dass** der Rechner (13) die Daten (D), die für die Vielzahl von auf den Achsschnittpunkt (9) bezogenen Radien (r) für die auf den jeweiligen Radius (r) bezogenen Kontaktwege (k) charakteristisch sind, anhand von makroskopischen Solleigenschaften des Kegelradgetriebes selbsttätig ermittelt.

**6.** Ermittlungsverfahren nach Anspruch 5,
**dadurch gekennzeichnet, dass** der Rechner (13) zum Ermitteln der Daten (D), die für die Vielzahl von auf den Achsschnittpunkt (9) bezogenen Radien (r) für die auf den jeweiligen Radius (r) bezogenen Kontaktwege (k) charakteristisch sind, die Kontaktwege (k) derart ermittelt, dass beim Rotieren der Kegelräder (1, 2) auftretende Reibungskräfte oder Abrollgeräusche minimal sind.

**7.** Kegelradgetriebe, das ein erstes und ein zweites Kegelrad (1, 2) aufweist,

- wobei das erste Kegelrad (1) eine Anzahl von ersten Zähnen (3) aufweist und im Betrieb mit einer ersten Drehzahl ($\omega_1$) um eine erste Rotationsachse (5) rotiert,
- wobei das zweite Kegelrad (2) eine Anzahl von zweiten Zähnen (4) aufweist und im Betrieb mit einer zweiten Drehzahl ($\omega_2$) um eine zweite Rotationsachse (6) rotiert,
- wobei die beiden Rotationsachsen (5, 6) sich unter Bildung eines Schnittwinkels ($\delta$) in einem Achsschnittpunkt (9) schneiden,
- wobei die beiden Kegelräder (1, 2) über erste Zahnflanken (7) der ersten Zähne (3) und zweite Zahnflanken (8) der zweiten Zähne (4) aufeinander einwirken,
- wobei die ersten Zahnflanken (7) der ersten Zähne (3) und die zweiten Zahnflanken (8) der zweiten Zähne (4) für eine Vielzahl von auf den Achsschnittpunkt (9) bezogenen Radien (r) entlang eines auf den jeweiligen Radius (r) bezogenen Kontaktweges (k) aufeinander einwirken,
- wobei der auf den jeweiligen Radius (r) bezogene Kontaktweg (k) einer Abfolge von Kontaktpunkten (12) entspricht, an denen während des Rotierens der beiden Kegelräder (1, 2) jeweils eine der ersten und der zweiten Zahnflanken (7, 8) aufeinander einwirken,
- wobei die Zahnform der ersten Zahnflanken (7) für diejenigen Radien (r), für die der jeweilige Kontaktweg (k) definiert ist, derart auf die Zahnform der zweiten Zahnflanken (8) abgestimmt ist, dass in allen Kontaktpunkten (12) die jeweils aufeinander einwirkenden ersten und zweiten Zahnflanken (7, 8), bezogen auf den jeweiligen Radius (r), eine gemeinsame Normale aufweisen und dass in allen Kontaktpunkten (12) die jeweilige Normale einen auf den jeweiligen Radius (r) bezogenen Wälzpunkt (c) schneidet, und
- wobei der auf den jeweiligen Radius (r) bezogene Wälzpunkt (c) zwischen den beiden Rotationsachsen (5, 6) liegt, vom Achsschnittpunkt (9) um den jeweiligen Radius (r) beabstandet ist und mit der ersten Rotationsachse (5) einen Wälzwinkel ($\gamma$) bildet, welcher der Beziehung

$$\tan\gamma = \frac{\sin\delta}{\omega_1/\omega_2 + \cos\delta}$$

genügt, wobei $\gamma$ der Wälzwinkel, $\delta$ der Schnittwinkel, $\omega_1$ die erste Drehzahl und $\omega_2$ die zweite Drehzahl sind.

**8.** Kegelradgetriebe nach Anspruch 7,
**dadurch gekennzeichnet, dass** für zwei beliebige der Radien (r), für die ein jeweiliger Kontaktweg (k) definiert ist, einer der beiden Kontaktwege (k) durch eine auf den Achsschnittpunkt (9) bezogene zentrische Streckung auf den anderen Kontaktweg (k) oder einen den Wälzpunkt (c) des anderen Kontaktweges (k) enthaltenden Abschnitt des anderen Kontaktweges (k) abbildbar ist.

**9.** Kegelradgetriebe nach Anspruch 7 oder 8,
**dadurch gekennzeichnet, dass** die Kontaktwege (k) auf einem den jeweiligen Wälzpunkt (c) enthaltenden Großkreis um den Achsschnittpunkt (9) liegen.

**10.** Kegelradgetriebe nach Anspruch 7 oder 8,
**dadurch gekennzeichnet, dass** die Kontaktwege (k) derart bestimmt sind, dass beim Rotieren der Kegelräder (1, 2) auftretende Reibungskräfte oder Abrollgeräusche minimal sind.

**Claims**

1. Method for determining geometry data for a first bevel gear (1) in a bevel gear drive which has in addition to the first bevel gear (1) a second bevel gear (2),

    - wherein the first bevel gear (1) has a number of first teeth (3) and in operation rotates about a first axis of rotation (5) at a first rotation speed ($\omega_1$),
    - wherein the second bevel gear (2) has a number of second teeth (4) and in operation rotates about a second axis of rotation (6) at a second rotation speed ($\omega_2$),
    - wherein the two axes of rotation (5, 6) intersect each other at an axis intersection point (9), forming an angle of intersection ($\delta$),
    - wherein the two bevel gears (1, 2) act on each other via first tooth flanks (7) on the first teeth (3) and second tooth flanks (8) on the second teeth (4),
    - wherein a computer (13) determines a tooth shape for the first tooth flanks (7) by reference to items of data (D) other than the tooth shape of the first tooth flanks (7),
    - wherein, for a plurality of radii (r) centred at the axis intersection point (9), the items of data (D) are characteristic of the contact path (k) relating to each particular radius (r),
    - wherein the contact path (k) relating to each particular radius (r) corresponds to a sequence of contact points (12) at which, during the rotation of the two bevel gears (1, 2), one each of the first and the second tooth flanks (7, 8) act on each other,
    - wherein, for those radii (r) for which a particular contact path (k) is defined, the computer (13) determines for the first tooth flanks (7) the tooth shape relating to the radius (r) concerned in such a way that at all the contact points (12) relating to the particular radius (r) concerned each of the first and second tooth flanks (7, 8) which act on each other have a common normal, relative to the radius (r) concerned, and that at all the contact points (12) relating to the radius (r) concerned the relevant normal passes through a pitch point (c) relating to the radius (r) concerned,
    - wherein the pitch point (c) relating to each particular radius (r) lies between the two axes of rotation (5, 6), is at a distance from the axis intersection point (9) equal to the radius (r) concerned and together with the first axis of rotation (5) forms a pitch angle ($\gamma$) which satisfies the relationship

$$\tan \gamma = \frac{\sin \delta}{\omega_1 / \omega_2 + \cos \delta}$$

    where $\gamma$ is the pitch angle, $\delta$ is the angle of intersection, $\omega_1$ the first rotation speed and $\omega_2$ the second rotation speed, and
    - wherein, using the tooth shape that it has determined for the first tooth flanks (7), the computer (13) determines the geometry data for the first bevel gear (1) and stores away the geometry data in a format using which a parts program (16) can be automatically generated for a processing machine (17) with at least five axes, for the purpose of manufacturing the first bevel gear (1), or using the geometry data generates directly the appropriate parts program (16).

2. Method of determination according to claim 1, **characterised in that** for two arbitrary radii (r), for each of which a contact path (k) is defined, one of the two contact paths (k) can be mapped, by an extrapolation centred at the axis intersection point (9), onto the other contact path (k) or onto a section of the other contact path (k) containing the pitch point (c) of the other contact path (k).

3. Method of determination according to claim 1 or 2, **characterised in that**, for the plurality of radii (r) centred at the axis intersection point (9), the items of data (D) which are characteristic of the contact paths (k) relating to each particular radius (r) are the contact paths (k) themselves or are the tooth shape of the second tooth flanks (8).

4. Method of determination according to claim 1, 2 or 3, **characterised in that** the contact paths (k) lie on a great circle, around the axis intersection point (9), which includes the pitch point (c) concerned.

**5.** Method of determination according to claim 1, 2 or 3,
**characterised in that** by reference to macroscopic target properties of the bevel gear drive the computer (13) autonomously determines, for the plurality of radii (r) centred at the axis intersection point (9), the items of data (D) which are characteristic of the contact paths (k) relating to each particular radius (r).

**6.** Method of determination according to claim 5,
**characterised in that** for the purpose of determining, for the plurality of radii (r) centred at the axis intersection point (9), the items of data (D) which are characteristic of the contact paths (k) relating to each particular radius (r), the computer determines the contact paths (k) in such a way that frictional forces or interrolling noises which arise when the bevel gears (1, 2) rotate are minimal.

**7.** Bevel gear drive which has a first and a second bevel gear (1, 2),

- wherein the first bevel gear (1) has a number of first teeth (3) and in operation rotates about a first axis of rotation (5) at a first rotation speed ($\omega_1$),
- wherein the second bevel gear (2) has a number of second teeth (4) and in operation rotates about a second axis of rotation (6) at a second rotation speed ($\omega_2$),
- wherein the two axes of rotation (5, 6) intersect each other at an axis intersection point (9), forming an angle of intersection ($\delta$),
- wherein the two bevel gears (1, 2) act on each other via first tooth flanks (7) on the first teeth (3) and second tooth flanks (8) on the second teeth (4),
- wherein, for a plurality of radii (r) centred at the axis intersection point (9), the first tooth flanks (7) of the first teeth (3) and the second tooth flanks (8) of the second teeth (4) act on each other along a contact path (k) relating to each particular radius (r),
- wherein the contact path (k) relating to the particular radius (r) concerned corresponds to a sequence of contact points (12) at which, while the two bevel gears (1, 2) are rotating, one each of the first and the second tooth flanks (7, 8) act on each other,
- wherein, for those radii (r) for which the relevant contact path (k) is defined, the tooth shape of the first tooth flanks (7) is matched to the tooth shape of the second tooth flanks (8) in such a way that at all the contact points (12) each of the first and second tooth flanks (7, 8) which act on each other have a common normal, relative to the particular radius (r) concerned, and that at all the contact points (12) the relevant normal passes through a pitch point (c) relating to the particular radius (r) concerned, and
- wherein the pitch point (c) relating to the particular radius (r) concerned lies between the two axes of rotation (5, 6), is at a distance from the axis intersection point (9) equal to the radius (r) concerned and together with the first axis of rotation (5) forms a pitch angle ($\gamma$) which satisfies the relationship

$$\tan \gamma = \frac{\sin \delta}{\omega_1 / \omega_2 + \cos \delta}$$

where $\gamma$ is the pitch angle, $\delta$ is the angle of intersection, $\omega_1$ the first rotation speed and $\omega_2$ the second rotation speed.

**8.** Bevel gear drive according to claim 7, **characterised in that** for two arbitrary radii (r), for each of which a contact path (k) is defined, one of the two contact paths (k) can be mapped, by an extrapolation centred at the axis intersection point (9), onto the other contact path (k) or onto a section of the other contact path (k) containing the pitch point (c) of the other contact path (k).

**9.** Bevel gear drive according to claim 7 or 8,
**characterised in that** the contact paths (k) lie on a great circle, around the axis intersection point (9), which includes the pitch point (c) concerned.

**10.** Bevel gear drive according to claim 7 or 8,
**characterised in that** the contact paths (k) are determined in such a way that frictional forces or interrolling noises which arise when the bevel gears (1, 2) rotate are minimal.

**Revendications**

1. Procédé de détermination de données de géométrie d'une première roue (1) conique d'un engrenage à roue conique, qui a en plus de la première roue (1) conique une deuxième roue (2) conique,

   - dans lequel la première roue (1) conique a un certain nombre de premières dents (3) et tourne en fonctionnement à une première vitesse ($\omega_1$) de rotation autour d'un premier axe (5) de rotation,
   - dans lequel la deuxième roue (2) conique a un certain nombre de deuxièmes dents (4) et tourne en fonctionnement à une deuxième vitesse ($\omega_2$) de rotation autour d'un deuxième axe (6) de rotation,
   - dans lequel les deux axes (5, 6) de rotation se coupent en formant un angle ($\delta$) d'intersection en un point (9) d'intersection des axes,
   - dans lequel les deux roues (1, 2) coniques agissent l'une sur l'autre par des premiers flancs des premières dents (3) et par des deuxièmes flancs (8) des deuxièmes dents (4),
   - dans lequel un ordinateur détermine une forme des premiers flancs (7) de dent au moyen de données (D) différentes de la forme des premiers flancs (7) de dent,
   - dans lequel les données (D) pour une pluralité de rayons (r) rapportés au point (9) d'intersection des axes sont caractéristiques d'un chemin (k) de contact rapporté aux rayons (r) respectifs,
   - dans lequel le chemin (k) de contact rapporté aux rayons (r) respectifs correspond à une succession de points (12) de contact, où pendant la rotation des deux roues (1, 2) coniques respectivement les uns des premiers et des deuxièmes flancs (7, 8) de dent agissent sur les autres,
   - dans lequel l'ordinateur (13) détermine pour les rayons (r) pour lesquels le chemin (k) de contact respectif est défini, la forme rapportée au rayon (r) respectif des premiers flancs (7) de dent de manière à ce que, dans tous les points (12) de contact rapportés au rayon (r) respectif, les premiers et deuxièmes flancs (7, 8) de dent, agissant respectivement les uns sur les autres, ont rapportés au rayon (r) respectif, une normale commune et en ce que, dans tous les points (12) de contact rapportés au rayon (r) respectif, la normale respective coupe un point (c) primitif rapporté au rayon (r) respectif,
   - dans lequel le point (c) primitif rapporté au rayon (r) respectif est entre les deux axes (5, 6) de rotation, est distant du point (9) d'intersection des axes du rayon (r) respectif et fait avec le premier axe (5) de rotation un angle ($\gamma$) primitif qui satisfait la relation

$$\tan \gamma = \frac{\sin \delta}{\omega_1 / \omega_2 + \cos \delta}$$

   - dans laquelle, $\gamma$ est l'angle primitif, $\delta$ est l'angle d'intersection, $\omega_1$ est la première vitesse de rotation et $\omega_2$ est la deuxième vitesse de rotation, et
   - dans lequel l'ordinateur (13) détermine les données de géométrie de la première roue (1) conique en utilisant la forme qu'il a déterminée des premiers flancs (7) de dent et mémorise les données de géométrie dans un modèle au moyen duquel un sous-programme (16) pour une machine (17) d'usinage, ayant au moins cinq axes de fabrication de la première roue (1) conique, peut être produit automatiquement ou le sous-programme (16) correspondant est produit directement au moyen des données de géométrie.

2. Procédé de détermination suivant la revendication 1, **caractérisé en ce que**, pour deux quelconques des rayons (r) pour lesquels un chemin (k) de contact respectif est défini, l'un des deux chemins (k) de contact peut être reproduit, par une étendue centrée rapportée au point (9) d'intersection des axes, sur l'autre chemin (k) de contact ou par un tronçon de l'autre chemin (k) de contact contenant le point (c) primitif de l'autre chemin (k) de contact.

3. Procédé de détermination suivant la revendication 1 ou 2, **caractérisé en ce que** les données (D) qui, pour la pluralité de rayons (r) rapportés au point (9) d'intersection des axes, sont caractéristiques des chemins (k) de contact rapportés aux rayons (r) respectifs sont les chemins (k) de contacts eux-mêmes ou la forme des deuxièmes flancs (8) de dent.

4. Procédé de détermination suivant la revendication 1, 2 ou 3,
   **caractérisé en ce que** les chemins (k) de contact se trouvent sur un grand cercle autour du point (9) d'intersection passant par le point (c) primitif respectif.

**5.** Procédé de détermination suivant la revendication 1, 2 ou 3,
**caractérisé en ce que** l'ordinateur (13) détermine automatiquement, au moyen de propriétés macroscopiques de consigne de l'engrenage à roue conique, les données (D) qui, pour la pluralité des rayons (r) rapportés au point (9) d'intersection des axes, sont caractéristiques des chemins (k) de contact rapportés au rayon (r) respectif.

**6.** Procédé de détermination suivant la revendication 5, **caractérisé en ce que** l'ordinateur (13) détermine, pour la détermination des données (D) qui, pour la pluralité de rayons (r) rapportés au point (9) d'intersection des axes, sont caractéristiques des chemins (k) de contact rapportés au rayon (r) respectif, les chemins (k) de contact de manière à ce que les forces de frottement ou les bruits de roulement se produisant lors de la rotation des roues (1, 2) coniques soient minimum.

**7.** Engrenage à roue conique qui a une première et une deuxième roue (1, 2) conique,

- dans lequel la première roue (1) conique a un certain nombre de premières dents (3) et tourne en fonctionnement à une première vitesse ($\omega_1$) de rotation autour d'un premier axe (5) de rotation,
- dans lequel la deuxième roue (2) conique a un certain nombre de deuxièmes dents (4) et tourne en fonctionnement à une deuxième vitesse ($\omega_2$) de rotation autour d'un deuxième axe (6) de rotation,
- dans lequel les deux axes (5, 6) de rotation se coupent en formant un angle ($\delta$) d'intersection en un point (9) d'intersection des axes,
- dans lequel les deux roues (1, 2) coniques agissent l'une sur l'autre par des premiers flancs des premières dents (3) et par des deuxièmes flancs (8) des deuxièmes dents (4),
- dans lequel les premiers flancs (7) de dent des premières dents (3) et les deuxièmes flancs (8) de dent des deuxièmes dents (4) agissent, pour une pluralité de rayons (r) rapportés au point (9) d'intersection des axes, le long d'un chemin (k) de contact rapporté au rayon (r) respectif,
- dans lequel le chemin (k) de contact rapporté au rayon (r) respectif correspond à une succession de points (12) de contact où pendant la rotation des deux roues (1, 2) coniques respectivement les uns des premiers et des deuxièmes flancs (7, 8) de dent agissent sur les autres,
- dans lequel la forme des premiers flancs (7) de dent pour les rayons, pour lesquels le chemin (k) de contact respectif est défini, est adaptée à la forme des deuxièmes flancs (8) de dent de manière à ce que, dans tous les points (12) de contact, les premiers et deuxièmes flancs (7, 8) de dent agissant respectivement l'un sur l'autre ont, rapportés au rayon (r) respectif une normale commune et de manière à ce que, dans tous les points (12) de contact, la normale respective coupe un point (c) primitif rapporté au rayon (r) respectif, et
- dans lequel le point (c) primitif rapporté au rayon (r) respectif est entre les deux axes (5, 6) de rotation, est distant du point (9) d'intersection des axes du rayon (r) respectif et fait avec le premier axe (5) de rotation un angle ($\gamma$) primitif qui satisfait la relation

$$\tan \gamma = \frac{\sin \delta}{\omega_1 / \omega_2 + \cos \delta}$$

- dans laquelle, $\gamma$ est l'angle primitif, $\delta$ est l'angle d'intersection, $\omega_1$ est la première vitesse de rotation et $\omega_2$ est la deuxième vitesse de rotation.

**8.** Engrenage à roue conique suivant la revendication 7, **caractérisé en ce que** pour deux quelconques des rayons (r) pour lesquels un chemin (k) de contact respectif est défini, l'un des deux chemins (k) de contact peut être reproduit par une étendue centrée rapportée au point (9) d'intersection des axes sur l'autre chemin (k) de contact ou par un tronçon de l'autre chemin (k) de contact contenant le point (c) primitif de l'autre chemin (k) de contact.

**9.** Engrenage à roue conique suivant la revendication 7 ou 8, **caractérisé en ce que** les chemins (k) de contact se trouvent sur un grand cercle autour du point (9) d'intersection passant par le point (c) primitif respectif.

**10.** Engrenage à roue conique suivant la revendication 7 ou 8, **caractérisé en ce que** les chemins (k) de contact sont adaptés de manière à ce que des forces de frottement ou des bruits de roulement se produisant lors de la rotation des roues (1, 2) coniques soient minimum.

FIG 1    Stand der Technik

FIG 2    Stand der Technik

FIG 3

FIG 4

FIG 5

FIG 6

FIG 7

## FIG 8

## FIG 10

| | |
|---|---|
| dem Rechner wird ein Optimalkriterium bekannt | S11 |
| der Rechner bestimmt selbsttätig die optimalen Kontaktwege | S12 |
| der Rechner ermittelt anhand der Daten die Zahnform der ersten Zahnflanken | S3 |

# FIG 9

dem Rechner werden Daten bekannt, die für eine Vielzahl von auf den Achsschnittpunkt bezogen Radien für einen auf den jeweiligen Radius bezogenen Kontaktweg charakteristisch sind ⟩~ S1

↓

der Rechner ermittelt anhand der ihm bekannten Daten die Kontaktwege ⟩~ S2

↓

der Rechner ermittelt anhand der Daten die Zahnform der ersten Zahnflanken ⟩~ S3

↓

der Rechner ermittelt unter Verwendung der ermittelten Zahnform der Zahnflanken die Geometriedaten des ersten Kegelrades ⟩~ S4

↓

der Rechner speichert die ermittelten Geometriedaten des ersten Kegelrades in einem Format ab, anhand dessen ein Teileprogramm für eine Bearbeitungsmaschine mit mindestens fünf Achsen automatisch generierbar ist ⟩~ S5

↓

der Rechner generiert das entsprechende Teileprogramm und speichert es in einer Datei ab ⟩~ S6

↓

der Rechner ermittelt anhand der Daten die Zahnform der zweiten Zahnflanken ⟩~ S7

↓

der Rechner ermittelt unter Verwendung der ermittelten Zahnform der Zahnflanken die Geometriedaten des zweiten Kegelrades ⟩~ S8

↓

der Rechner speichert die ermittelten Geometriedaten des zweiten Kegelrades in einem Format ab, anhand dessen ein Teileprogramm für eine Bearbeitungsmaschine mit mindestens fünf Achsen automatisch generierbar ist ⟩~ S9

↓

der Rechner generiert das entsprechende Teileprogramm und speichert es in einer Datei ab ⟩~ S10

## IN DER BESCHREIBUNG AUFGEFÜHRTE DOKUMENTE

**In der Beschreibung aufgeführte Patentdokumente**

- EP 1773530 B1


**In der Beschreibung aufgeführte Nicht-Patentliteratur**

- Maschinenelemente Band II. **G. NIEMANN ; H. WINTER.** Die entsprechenden Ausführungen finden sich insbesondere. Springer Verlag, 1985, 32-35
- **G. BÄR.** Explicit Calculation Methods for Conjugate Profiles. *Journal for Geometry and Graphics,* 2003, vol. 7 (2), 201-210
- **A. JOHANN ; J. SCHEURLE.** On the generation of conjugate flanks for arbitrary gear geometries. *GAMM-Mitteilungen,* 2009, vol. 32, 61-79
- **G. NIEMANN ; H. WINTER.** Maschinenelemente Band III. Springer Verlag, 1983, 25-32
- **J. KLINGELNBERG.** Kegelräder: Grundlagen, Anwendungen. Springer Verlag, 2008, 28, 29
- **A. K. THOMAS.** Grundzüge der Verzahnung. Carl Hanser Verlag, 1957, 28, 29
- Rechnerische Analyse und Optimierung des Beanspruchungsverhaltens bogenverzahnter Kegelräder. **W. M. SCHWEICHER.** Besonders relevant sind die. 1994, 72-86
- **V. SIMON.** Optimal Machine Tool Setting for Hypoid Gears Improving Load Distribution. *ASME Journal of Mechanical Design,* 2001, vol. 123
- **M. SAVAGE et al.** Tooth Contact Shift in Loaded Spiral Bevel Gears. *Gear Technology,* 1992, vol. 9 (6), 24-31
- **G. FIGLIOLINI ; J. ANGELES.** Algorithms for Involute and Octoidal Bevel-Gear Generation. *Transactions of the ASME,* Juli 2005, vol. 127, 664-672
- **DIETER WIENER.** Korrekturverfahren für Kegelrad-Verzahnungen. *Antriebstechnik,* 2000, vol. 39 (6), 36-40137f
- 5-Achsen-Fräsen ersetzt klassisches Verzahnen. *Spanende Fertigung, Technische Rundschau Nr. 4/2010,* 2010, 63-66